# EUROPEAN PATENT APPLICATION

(11) **EP 4 559 672 A1**
(43) Date of publication of application: **28.05.2025**
(21) Application number: 23212398.4
(22) Date of filing: 27.11.2023
(51) Int. Cl.: B32B 7/06, B32B 7/12, B32B 15/04, C09J 175/04

(54) **METHOD OF SEPARATING BONDED ARTICLES**

(71) Applicant: Henkel AG & Co. KGaA, 40589 Düsseldorf (DE)
(72) Inventor: Franken, Uwe, 41542 Dormagen (DE); Lammerschop, Olaf, 47802 Krefeld (DE); Roepert, Marie-Christin, 40591 Düsseldorf (DE); Lu, Yuzhou, 40219 Düsseldorf (DE)

(57) **Abstract**

The present disclosure is directed to a method for debonding a bonded article, said method comprising the steps of:
a) providing a bonded article comprising at least one layer of a first adhesive interposed between two substrate surfaces, said bonded article being further provided with at least one layer of a second adhesive which is interposed between said two substrate surfaces, wherein:
the or each layer of first adhesive has a dry film thickness of from 10 to 500 µm; and,
said first adhesive is a polyurethane adhesive selected from aqueous polyurethane dispersion adhesives and polyurethane hot melt adhesives;

b) treating the bonded article at a temperature of from 20 to 90°C with a solution in a polar solvent of at least one compound selected from the group consisting of: C₁₀ to C₂₆ fatty acids; salts of C₁₀ to C₂₆ fatty acids; and, C₁-C₄ alkyl esters of C₁₀ to C₂₆ fatty acids, wherein said solution has a pH of from 3 to 14; and,
c) separating said at least one layer of first adhesive from its interposition between said two substrate surfaces.

## Description

### FIELD OF THE INVENTION

The present disclosure is directed to the debonding of adhesively bonded articles. More particularly, the present disclosure is directed to the use in the debonding of adhesively bonded articles of a solution in a polar solvent of a long chain fatty acid or a salt or ester thereof.

### BACKGROUND TO THE INVENTION

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of aggressive chemicals and / or high temperature - such as disclosed in US Patent No. 4,171,240 (Wong) and US Patent No. 4,729,797 (Linde et al.) - might be effective but can be time consuming and complex to perform: moreover, the aggressive chemicals and / or harsh conditions required can damage the substrates being separated, rendering them unsuitable for subsequent applications. This can be particularly detrimental where the substrates themselves are of high economic value, as may be the case with bonded electrical components and metallic materials.

WO 01/30932 A2 (Henkel KGaA) describes the reversible separation of adhesively bonded composites by applying electromagnetic alternating fields. The adhesively bonded composite comprises at least one primer coating which contains nanoscale sized particles having ferromagnetic, ferrimagnetic, superparamagnetic or piezoelectric characteristics. Large amounts of heat are generated locally in the primer coat pertaining to the adhesive bonded composites by applying electromagnetic alternating fields. Where the primer layer is interposed between the substrate and a thermoplastic adhesive layer, the local heat generation causes a softening of the thermoplastic resin. Conversely, where the primer layer is interposed between the substrate and a thermosetting adhesive layer, the local heat generation can split the cross-linked structure of the binding agent matrix. In both cases, strong local heating of the boundary layer enables quasiadhesive substrate separation at low force inputs.

EP 4 011 996 A1 (Henkel AG & Co. KGaA) is directed to a method for detaching two substrates bonded by an adhesive. The method comprises the steps of: i) treating two substrates bonded by an adhesive with a debonding agent comprising acetone and/or oleic acid at a temperature from 20°C to 90°C; and, ii) removing the substrates from the adhesive.

WO2021/249749 A1 (BASF SE) discloses a method for debonding a bonded article, which article comprises at least two components which are bonded to one another by means of a polyurethane adhesive selected from aqueous polyurethane dispersion adhesives and polyurethane hotmelt adhesives. At least one of the components is a thermoplastic polyurethane. The components are debonded by treatment with an aqueous surfactant composition at elevated temperatures.

There is considered to remain a need in the art to provide an efficacious method of debonding a bonded article which can be performed in a simple and efficient manner, without requiring harsh chemicals, elevated temperatures, mechanical abrasion or the concomitant application of significant force. Moreover, a method in which the separated substrates can retain their utility and be re-used or recycled would be advantageous.

### STATEMENT OF THE INVENTION

In accordance with a first aspect of the disclosure, there is provided a bonded article comprising at least one layer of a first adhesive interposed between two substrate surfaces, said bonded article being further provided with at least one layer of a second adhesive which is interposed between said two substrate surfaces, wherein:
the or each layer of first adhesive has a dry film thickness of from 10 to 500 µm, for example from 30 to 300 µm; and,
said first adhesive is a polyurethane adhesive selected from aqueous polyurethane dispersion adhesives and polyurethane hot melt adhesives.

Typically the bonded article will comprise: a first substrate having an inner surface; and, a second substrate having an inner surface, wherein said layers of the first and second adhesive are interposed between the inner surfaces of the first and second substrates. In important embodiments, at least one of said first and second substrates is metallic. Independently of, or additional to that condition, it is preferred that at least one layer of said first adhesive directly contacts the surface of a substrate.

The first and second adhesives are distinct from one another. The second adhesive should desirably possess a higher intra-layer cohesive strength than the first adhesive, as determined by comparative testing of the adhesives under tensile stress applied to layers thereof. The term *"intra-layer cohesive strength"* as used herein means the amount of force required to separate an adhesive layer by cohesive failure, as measured in a direction that is perpendicular to the plane of the layer and in accordance with ASTM F88-94. The second adhesive may possess, in important embodiments, an intra-layer cohesive strength which is at least 10% greater than the intra-layer cohesive strength of the first adhesive. In an alternative expression, which is not intended to be mutually exclusive of that given above, the intra-layer cohesive strength of the first adhesive may be from 2 to 8 MPa and the intra-layer cohesive strength of the second adhesive may be at least 10 MPa, for instance from 10 to 100 MPa.

Having regard to the first adhesive, the aqueous polyurethane dispersion adhesive may be of a one-part (1K) or two-part (2K) type. It is preferred that the polyurethane dispersion adhesive is of the two-part (2K) type. More particularly, in an important embodiment, said first adhesive is obtained by curing a two-part (2K) water-borne composition comprising:
p) a first part comprising:
   (pi) at least one anionic polyurethane polymer having pendant hydroxyl groups; and,
q) a second part comprising at least one polyisocyanate compound having pendant -NCO groups,
wherein the two-part (2K) water-borne composition is characterized in that the molar ratio of active hydrogen atoms to -NCO groups in the composition is from 5:1 to 1:5.

In certain embodiments, part p) of the two-part (2K) water-borne composition comprises at least one anionic polyurethane polymer which is characterized by: an hydroxyl functionality of from 2 to 4; an hydroxyl value of from 0.5 to 10 mg KOH/g, preferably from 0.5 to 4 mg KOH/g; and, a weight average molecular weight (Mw) of from 50 to 200 kDa, preferably from 50 to 150 kDa, more preferably from 50 to 125 kDa. Independently of, or additional to this selection of polyurethane polymer, it is preferred that part q) of the two-part (2K) water-borne composition comprises a linear aliphatic polyisocyanate.

The provision of the layer(s) of first adhesive - in particular as a layer directly disposed upon the substrate surface - represents an important locus for the attack of a debonding solution and, in particular, the debonding solution described herein below. The at least partial removal of the layer(s) of the first adhesive, through treatment with the debonding solution, permits the facile separation of the bonded substrates.

In accordance with a second aspect of the disclosure, there is provided the use in the debonding of an adhesively bonded article as defined herein above and in the appended claims of a solution in a polar solvent of at least one compound selected from the group consisting of: C₁₀ to C₂₆ fatty acids; salts of C₁₀ to C₂₆ fatty acids; and, C₁-C₄ alkyl esters of C₁₀ to C₂₆ fatty acids, wherein said debonding solution has a pH of from 3 to 14. The debonding solution may, for instance, have a pH of from 3 to 7 or from 3 to 6.

It is preferred that the debonding solution comprises, based on the weight of the solution, from 5 to 30 wt.%, preferably from 5 to 25 wt.% of said at least one compound selected from the group consisting of: C₁₀ to C₂₆ fatty acids; salts of C₁₀ to C₂₆ fatty acids; and, C₁-C₄ alkyl esters of C₁₀ to C₂₆ fatty acids.

Good results have been obtained where said at least one compound of the debonding solution is selected from the group consisting of: C₁₆-C₁₈ monounsaturated fatty acids; salts of C₁₆-C₁₈ monounsaturated fatty acids; and, C₁-C₄ alkyl esters of C₁₆-C₁₈ monounsaturated fatty acids. And in a particularly effective embodiment, said at least one compound of the debonding solution is selected from the group consisting of: oleic acid; salts of oleic acid; and, C₁-C₂ alkyl esters of oleic acid.

The polar solvent of the debonding solution preferably comprises or consists of at least one compound selected from the group consisting of: water; polyalkylene glycol dialkyl ethers; and, dibasic esters. Independently of, or additional to, this statement of preference, the debonding solution further comprises, based on the weight of the solution, from 0.5 to 50 wt.%, preferably from 0.5 to 40 wt.%, of at least one surfactant selected from the group consisting of non-ionic surfactants and anionic surfactants.

The present disclosure further provides a method for debonding a bonded article, said method comprising the steps of:
a) providing a bonded article as defined herein above and in the appended claims, the bonded article comprising at least one layer of a first adhesive interposed between two substrate surfaces, said bonded article being further provided with at least one layer of a second adhesive which is interposed between said two substrate surfaces, wherein:
   the or each layer of first adhesive has a dry film thickness of from 10 to 500 µm; and,
   said first adhesive is a polyurethane adhesive selected from aqueous polyurethane dispersion adhesives and polyurethane hot melt adhesives;
b) treating the bonded article at a temperature of from 20 to 90°C, for example from 30 to 75°C, with a solution in a polar solvent of at least one compound selected from the group consisting of: C₁₀ to C₂₆ fatty acids; salts of C₁₀ to C₂₆ fatty acids; and, C₁-C₄ alkyl esters of C₁₀ to C₂₆ fatty acids, wherein said solution has a pH of from 3 to 14; and,
c) separating said at least one layer of first adhesive from its interposition between said two substrate surfaces.

In an effective embodiment, the treatment step of this method comprises immersing the bonded article in said solution. That aside, the treatment step is characterized by a contact time of from 0.1 to 24 hours, preferably 0.5 to 20 hours.

Where the aspects of the disclosure are described above as having certain embodiments, any one or more of those embodiments can be implemented in or combined with any one of the further embodiments, even if that combination is not explicitly described. Expressed differently, the described embodiments are not mutually exclusive, and permutations thereof remain within the scope of this disclosure.

### DEFINITIONS

As used herein, the singular forms "*a*", *"an"* and *"the"* include plural referents unless the context clearly dictates otherwise.

The terms *"comprising", "comprises"* and *"comprised o*f" as used herein are synonymous with *"including", "includes", "containing"* or *"contains",* and are inclusive or open-ended and do not exclude additional, non-recited members, elements or method steps.

As used herein, the term *"consisting of'* excludes any element, ingredient, member or method step not specified. For completeness, the term *"comprising"* encompasses *"consisting of".*

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word *"exemplary"* is used herein to mean serving as an example, instance, or illustration. Any aspect or design described herein as *"exemplary"* is not necessarily to be construed as preferred or advantageous over other aspects or designs. Rather, use of the word exemplary is intended to present concepts in a concrete fashion.

As used throughout this application, the word *"may"* is used in a permissive sense - that is meaning to have the potential to - rather than in the mandatory sense.

Spatially relative terms, such as *"inner", "outer", "top", "back", "above",* "*below*", "*left*", *"right'* and the like may be applicable herein to describe an component's relationship to another component(s) as illustrated in the figures. Obviously all such spatially relative terms refer to the orientation shown in the figures only for ease of illustration and are not necessarily limiting given that an assembly can assume orientations and configurations different from those illustrated in the figures when in use.

The term *"plurality"* as used herein is defined as two or more than two.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to x*" specifically includes 0 wt.%: the ingredient defined by said range may be absent from the material or may be present in the material in an amount up to x wt.%.

The molecular weights referred to in this specification can be measured with gel permeation chromatography (GPC) using polystyrene calibration standards, such as is done according to ASTM 3536.

The term *"acid value"* references a determination of the mass (mg) of potassium hydroxide (KOH) which is necessary to neutralize 1g of a compound. The acid value can be determined by potentiometric analysis in accordance DIN EN ISO 2114.

The term *"hydroxyl value"* as used herein is defined as the mass (mg) of potassium hydroxide required to neutralize the acetic acid taken up on acetylation of one gram of a chemical substance that contains free hydroxyl groups. The hydroxyl value may be determined in accordance with DIN 53240.

The term *"flash point'* as used herein refers to the minimum temperature at which a liquid gives off vapor within a test vessel in sufficient concentration to form an ignitable mixture with air near the surface of the liquid. It may be determined using the appropriate active standard test methods, of which mention may be made of: ASTM D-56 *Standard Method of Test for Flashpoint by Tag Closed Tester;* and, ASTM *D93 Standard Method of Test for Flashpoint by Pensky-Martens Closed Tester.*

Viscosities of the compositions described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the coating compositions are done using the No. 6 spindle at a speed of 20 revolutions per minute for 1 minute until the viscometer equilibrates. The viscosity corresponding to the equilibrium reading is then calculated using the calibration.

As used herein, room temperature is 23°C plus or minus 2°C.

As used herein, *"ambient conditions"* means the temperature and pressure of the surroundings in which either the adhesive composition, the debonding solution or the bonded article are located.

As used herein, *"curing"* of the water-borne primer composition refers to the formation of a coating on a substrate: whilst the curing will include cross-linking reaction(s), it further encompasses: evaporation of water and, when present, co-solvent from the composition (drying); and, coalescence of the particulate or dispersed phase of the composition. Such curing may be performed under ambient conditions or by deliberate exposure to heat and / or irradiation. The degree of cure may be partial or complete: the degree (%) of cross-linking can, in particular, be determined by dynamic mechanical thermal analysis (DMTA) using a Polymer Laboratories MK III DMTA Analyzer under an inert gas atmosphere.

Unless otherwise stated, the term *"particle size"* refers to the largest axis of the particle. In the case of a generally spherical particle, the largest axis is the diameter.

As used herein, by "*d₅₀ particle size"* is meant that the particle size distribution is such that at least 50% of the particles by volume have a particle size diameter of less than the specified value. Unless otherwise stated, that particle size is determined by dynamic light scattering (DLS).

As used herein, the term *"solids content*" refers to the percent by weight of non-volatile components in the composition. The solids content may be determined as the inverse value of the volatile content obtained in accordance with ASTM D2369 Standard Test Method for Volatile Content of Coatings.

*"Two-part (2K) compositions"* in the context of the present disclosure are understood to be compositions in which a first part (A) and a second part (B) must be stored in separate vessels because of their (high) reactivity. The two parts are mixed only shortly before application and then react, typically without additional activation, with bond formation and thereby formation of a polymeric network. Herein higher temperatures may be applied in order to accelerate the cross-linking reaction.

The term *"water-borne primer composition"* as used herein refers to that composition which actually contacts the substrate to be primed. The term *"water-borne"* means that the solvent or carrier fluid for the composition primarily or principally comprises water such that water constitutes at least 50% by weight, for example at least 60% by weight or at least 70% by weight, of the continuous liquid phase of the composition.

As used herein, *"metallic"* means any type of metal, metal alloy, or mixture thereof. As used herein, the term *"alloy"* refers to a substance composed of two or more metals or of a metal and a non-metal which have been intimately united, usually by being fused together and dissolved in each other when molten.

As used herein, an *"active hydrogen compound"* is a compound that includes at least one hydrogen atom that may be readily dissociated in an aqueous environment. Preferably, the hydrogen atom is attached to a nitrogen atom, an oxygen atom, a phosphorous atom, or a sulfur atom.

A *"ionic polyurethane"* as used herein is one that contains a hydrophilic ionizable group.

The term *"blocked"* as used herein refers to a compound that has been reacted with a second compound - possessing a *"blocking group"* - such that its reactive functionality is not available until such time as the blocking group is removed. The blocking group can be selectively removed at an appropriate point in the synthetic sequence: the triggering event may be *inter alia* moisture, heat or irradiation. Examples of blocked isocyanates include those that have been co-reacted with phenol, methyl ethyl ketoxime or ε-caprolactam.

The term *"debonding composition"* as used herein refers to that composition which actually contacts the bonded articles. Such contacting may occur in a so-called *"bath"* which is shaped, sized and disposed to enable at least part of the substrate to be immersed therein. The bath should moreover be sized to allow for movement of the composition around and throughout the loaded substrate, which movement can be further enhanced with recirculation and / or ultrasonics. The pH of the composition within the bath, the temperature of the bath, and contact time of the substrate are result effective variables which should be monitored either manually or automatically, whenever possible.

As used herein, *"mineral acid"* refers to an acid derived from one or more inorganic compounds. A mineral acid is not organic and all mineral acids release hydrogen ions when dissolved in water.

As used herein, *"phosphoric acid"* refers to ortho-phosphoric acid having the formula H₃PO₄, which acid is typically available as an aqueous solution having a concentration up to 75 wt.% H₃PO₄. As used herein *"phosphonic acid"* refers to the phosphorus oxoacid having the formula H₃PO₃ that consists of a single pentavalent phosphorus covalently bound via single bonds to a single hydrogen and two hydroxy groups and via a double bond to an oxygen.

As used herein, the term *"α-hydroxycarboxylic acid"* means a carboxylic acid having at least one hydroxyl functional group occupying an α-position on said acid (carbon adjacent to a carboxylic acid functional group). The presence of hydroxyl groups occupying positions in the molecule other than the α-position on said acid is not precluded. When present, α-hydroxycarboxylic acid is included in the present composition in the form of the free acid.

As used herein *"basicity"* means the quality of being a base, not an acid. More particularly, in accordance with the Lewis theory of acids and bases, a base is an electron-pair donor. This definition encompasses but is not limited to Bronsted-Lowry bases, which compounds act as proton acceptors.

Water, for use as a (co-)solvent or diluent herein, is intended to mean water of low solids content as would be understood by a person of ordinary skill in the art. The water may, for instance, be distilled water, demineralized water, deionized water, reverse osmosis water, boiler condensate water, or ultra-filtration water. Tap water may be tolerated in certain circumstances.

As used herein *"solvents"* are substances capable of dissolving another substance to form a uniform solution; during dissolution neither the solvent nor the dissolved substance undergoes a chemical change. Solvents may either be polar or non-polar. The term *"alcoholic solvent*" encompasses such solvents which are any water-soluble mono-alcohols, diols or polyols that are liquids at 25°C at atmospheric pressure.

The term *"aprotic solvents"* as used herein refers to solvents that do not yield or accept a proton. Conversely *"protic solvents"* are those solvents capable of yielding or accepting a proton. The *"polar solvent*" as used herein refers to a solvent having a dielectric constant (ε) of more than 5 as measured at 25°C: the term encompasses both aprotic and protic solvents. The determination of dielectric constant (ε) is well known in the art and is within the knowledge of the skilled person: the use of measured voltages across parallel plate capacitors in such determinations may be mentioned.

The term *"water-immiscible liquid",* as used herein refers to a liquid that forms a two-phase system with water. In this regard, a particular preference may be noted for liquids which are slightly soluble, very slightly soluble or practically insoluble in water and are thereby characterized by requiring ≥ 100 ml of water to dissolve 1 g of the named compound at room temperature (https://www.sigmaaldrich.com/united-kingdom/technical-services/solubility.html).

As used herein, "*polyol*" refers to any compound comprising two or more hydroxyl groups: the term is thus intended to encompass diols, triols and compounds containing four or more -OH groups.

As used herein, "*C₁-Cₙ alkyl*" group refers to a monovalent group that contains 1 to n carbons atoms, that is a radical of an alkane and includes straight-chain and branched organic groups. As such, a "*C₁-C₄ alkyl*" group refers to a monovalent group that contains from 1 to 4 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; and, tert-butyl. In the present disclosure, such alkyl groups may be unsubstituted or may be substituted with one or more halogen. Where applicable for a given moiety (R), a tolerance for one or more non-halogen substituents within an alkyl group will be noted in the specification.

The terms *"alkylene group"* refers to a group that are radicals of a linear, branched or cyclic alkane, which group may be substituted or unsubstituted and may optionally be interrupted by at least one heteroatom.

The term "*C₁-Cₙhydroxyalkyl*" as used herein refers to an HO-(alkyl) group having from 1 to n carbon atoms, where the point of attachment of the substituent is through the oxygen-atom and the alkyl group is as defined above.

An *"alkoxy group"* refers to a monovalent group represented by -OA where A is an alkyl group: non-limiting examples thereof are a methoxy group, an ethoxy group and an iso-propyloxy group. The term *"alkoxylated"* as used herein means comprising at least one alkoxy group.

As used herein, "*C₂-C₆ alkenyl*" group refers to an aliphatic carbon group that contains 2 to 6 carbon atoms and at least one double bond disposed in any position. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having "cis" and "trans" configurations, or alternatively, "E" and "Z" configurations, as appreciated by those of ordinary skill in the art. In general, however, a preference for unsubstituted alkenyl groups containing from 2 to 6 (C₂-C₆) or from 2 to 4 (C₂-C₄) carbon atoms should be noted. And Examples of C₂-C₆ alkenyl groups include, but are not limited to: ethenyl; 1-propenyl; 2-propenyl; 1-methylethenyl; 1-butenyl; 2-butenyl; 4-methylbutenyl; 1-pentenyl; 2-pentenyl; 3-pentenyl; 4-pentenyl; 4-methyl-3-pentenyl; 1-hexenyl; 3-hexenyl; and, 5-hexenyl.

The term "*C₃-C₆ cycloalkyl*" as used herein means an optionally substituted, saturated cyclic hydrocarbon having 3-6 carbon atoms. In the present disclosure, such cycloalkyl groups may be unsubstituted or may be substituted with one or more halogen. Where applicable for a given moiety (R), a tolerance for one or more non-halogen substituents within a cycloalkyl group will be noted in the specification. Exemplary cycloalkyl groups include cyclopropyl, cyclobutyl, cyclopentyl or cyclohexyl groups.

As used herein, "*C₃-C₆ cycloalkylene"* means a divalent radical formed by the removal of two hydrogen atoms from one or more rings of a cycloalkyl group having from 3 to 6 carbon atoms.

As used herein, "*C₂-C₁₈ alkenyl*" refers to hydrocarbyl groups having from 2 to 18 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having *"cis"* and *"trans"* configurations, or alternatively, "*E*" and "*Z*" configurations, as appreciated by those of ordinary skill in the art. Examples of said C₂-C₂₀ alkenyl groups include, but are not limited to: -CH=CH₂; - CH=CHCH₃; -CH₂CH=CH₂; -C(=CH₂)(CH₃); -CH=CHCH₂CH₃; -CH₂CH=CHCH₃; - CH₂CH₂CH=CH₂; -CH=C(CH₃)₂; -CH₂C(=CH₂)(CH₃); -C(=CH₂)CH₂CH₃; -C(CH₃)=CHCH₃; - C(CH₃)CH=CH₂; -CH=CHCH₂CH₂CH₃; -CH₂CH=CHCH₂CH_{3;} -CH₂CH₂CH=CHCH₃; - CH₂CH₂CH₂CH=CH₂; -C(=CH₂)CH₂CH₂CH₃; -C(CH₃)=CHCH₂CH₃; -CH(CH₃)CH=CHCH_{;} - CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, an "*C₆-C₁₈ aryl*" group used alone or as part of a larger moiety - as in *"aralkyl group"* - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present disclosure, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl.

As used herein, "*alkylaryl*" refers to alkyl-substituted aryl groups and *"substituted alkylaryl"* refers to alkylaryl groups further bearing one or more substituents as set forth above. Further, as used herein *"aralkyl"* means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. "*Heteroalkyl*", "*heterocycloalkyl*" and "*heteroaryl*" moieties are alkyl, cycloalkyl and aryl groups as defined hereinabove, respectively, containing N, O, Si or S as part of their structure.

The term "*heterocyclyl*" refers to a monovalent chain of carbon and heteroatoms, wherein the heteroatoms are selected from N, O, Si or S, a portion of which, including at least one heteroatom, form a ring.

The term *"substituted"* refers to substitution with at least one suitable substituent. For completeness: the substituents may connect to the specified group or moiety at one or more positions; and, multiple degrees of substitution are allowed unless otherwise stated. Further, the terms *"substitution"* or *"substituted with"* include the implicit proviso that such substitution is in accordance with permitted valence of the substituted atom and the substituent, and that the substitution results in a stable compound that does not spontaneously undergo transformation by, for instance, rearrangement, cyclization or elimination.

The term *"substantially free"* is intended to mean that the constituent, component, compound, moiety, functional group, element, ion or the like is not deliberately added to the subject material and is present, at most, in only trace amounts which will have no (adverse) effect on the desired properties of the material. As regards compositions, an exemplary trace amount is less than 1000 ppm by weight of the composition. The term *"substantially free"* encompasses those embodiments where the specified compound, moiety, functional group, element, ion, or other like component is completely absent from the subject material or is not present in any amount measurable by techniques generally used in the art.

The term *"anhydrous"* as used herein has equivalence to the term *"substantially free of water*". Water is not deliberately added to a given composition and is present, at most, in only trace amounts which will have no (adverse) effect on the desired properties of the composition.

### BRIEF DESCRIPTION OF THE DRAWINGS

The present disclosure will hereinafter be described in conjunction with the following drawings, wherein like numerals denote like elements, and wherein:
Figure 1 illustrates a bonded article in accordance with a first embodiment of the present disclosure;
Figure 2 illustrates a bonded article in accordance with a second embodiment of the present disclosure; and,
Figure 3 illustrates a bonded article in accordance with a third embodiments of the present disclosure.

### DETAILED DESCRIPTION OF THE INVENTION

### A) BONDED ARTICLE

The articles to be treated with the above-described debonding solution include at least one constituent substrate bonded with first and second adhesives. This therefore encompasses articles which comprise a singular substrate which is folded upon itself such that one part of the substrate may be adhered to another part thereof. More typically however, the bonded article will comprise at least two substrates which are bonded together by means of said first and second adhesives.

The constituent substrate(s) may be selected from the group consisting of: metallic substances; semiconductor materials; polymers, including polyesters, polyamides and rubbers; glass; ceramics; lignocellulosic materials, including cotton, rayon *(viscose)* and cellophane; cellulose esters; and, mixtures or composites thereof. Where the bonded article comprises at least two substrates, said substrates may be the same or may be different from one another. And, as noted above, the present disclosure has particular applicability to the debonding of articles which comprise a metallic substance as at least one constituent substrate.

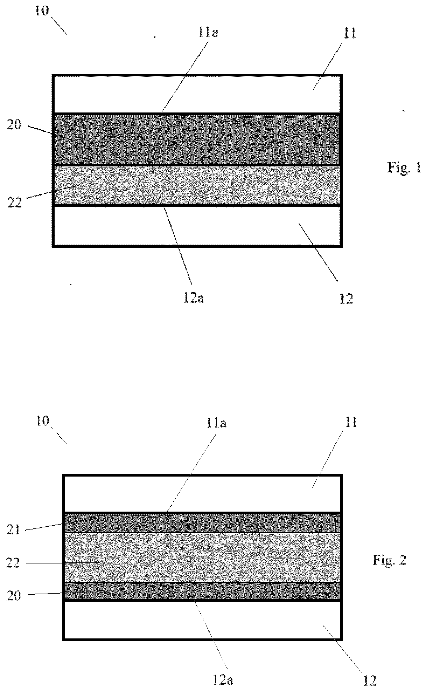

Figure 1 depicts a bonded article (10) in accordance with a first embodiment of the present disclosure. The bonded article (10) includes a first substrate (11) and a second substrate (12) which respectively possess inner surfaces (11a, 12a). A first adhesive layer (20) is provided directly upon the inner surface (11a) of the first substrate (11) and has a dried film thickness (d₂₀) of from 30 to 500µm. That first adhesive layer (20) is, in important embodiments, obtained by the curing of a two-part (2K) water-borne composition based on polyurethane, the water-borne composition comprising: p) a first part comprising: (pi) at least one anionic polyurethane polymer having pendant hydroxyl groups; and, q) a second part comprising at least one polyisocyanate compound having pendant - NCO groups, wherein the composition is characterized in that the molar ratio of active hydrogen atoms to -NCO groups in the composition is from 5:1 to 1:5.

Interposed between that first adhesive layer (20) and the inner surface (12a) of the second substrate (12) is a second adhesive layer (22), which layer should typically possess a dried film thickness (d₂₂) of from 30 to 1000 µm, for example from 30 to 500µm.

There is no particular intention to limit the constituent adhesive of the second adhesive layer (22) but it should be compatible with the first adhesive layer (20). However, as noted above, the second adhesive is distinct from the first adhesive and possesses a higher intra-layer cohesive strength than the first adhesive, as determined by comparative testing of the adhesives undertensile stress applied to layers thereof. The cohesive strength is closely correlated to the bulk physical properties of the adhesive: in the present disclosure, the elevated intra-layer cohesive strength of the second adhesive may be consequential to an increased crosslinking density of the second adhesive relative to the first adhesive. Alternatively or additionally, the second adhesive may, as compared to the first adhesive, possess a higher loading of particulate fillers which contribute to the cohesive bond strength.

The second adhesive may possess, in important embodiments, an intra-layer cohesive strength which is at least 10% greater than the intra-layer cohesive strength of the first adhesive. Preferably, the second adhesive may have an intra-layer cohesive strength which is at least 15% or at least 20% greater than the intra-layer cohesive strength of the first adhesive.

In an alternative expression, which is not intended to be mutually exclusive of that given immediately above, the intra-layer cohesive strength of the first adhesive may be from 2 to 8 MPa and the intra-layer cohesive strength of the second adhesive may be at least 10 MPa, for instance from 10 to 100 MPa.

Exemplary adhesives of which the second adhesive layer (22) may be composed include but are not limited to epoxide, acrylate and polyurethane adhesives. A preference may be noted, however, for the bonded articles (10) comprising - as said second adhesive - polyurethane adhesives and, more particularly, polyurethane adhesives selected from water-borne polyurethane adhesives, solvent-borne polyurethane adhesives and polyurethane hotmelt adhesives.

In the alternative embodiment illustrated in Figure 2, the bonded article (10) is provided with two layers (20, 21) of the first adhesive which respectively directly contact the inner surfaces (11a, 12a) of the first (11) and second (12) substrates. The specific constitution of the two layers (20, 21) may be the same of different but both adhesives should be selected from aqueous polyurethane dispersion adhesives and polyurethane hot melt adhesives. In important embodiments, both adhesive layers (20, 21) should be obtained by the curing of a two-part (2K) water-borne composition based on polyurethane as defined herein. Moreover, the dry film of thickness (d₂₀, d₂₁) of the two layers may be the same or different but should each be in the range from 30 to 500 µm. These adhesive layers (20, 21) may be considered as debondable primer layers of the substrates (11, 12). A second adhesive layer (22), typically having a dried film thickness (d₂₂) of from 30 to 1000µm, is interposed between the layers (20, 21) of the first adhesive.

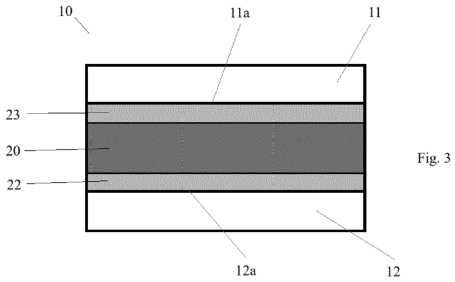

In the further embodiment illustrated in Figure 3, the bonded article (10) is provided with two layers (22, 23) of the second adhesive which respectively directly contact the inners surfaces (11a, 12a) of the first (11) and second (12) substrates. The specific constitution of the two layers (22, 23) may be the same or different. Moreover, the dry film of thickness (d₂₂, d₂₃) of the two layers may be the same or different but should each be in the range from 30 to 1000 µm. A layer (20) of a first adhesive, having a dried film thickness (d₂₂) of from 30 to 500µm, is interposed between the layers (22, 23) of the second adhesive.

In each of these embodiments, the layers (20, 21) of the first adhesive are intended to provide a locus at which the debonding of the article (10) may occur upon treatment of that article with the debonding solution described herein. Whilst the configuration of the bonded article (10) in Figure 3 is operable, debonding of the article may still result in significant residual second adhesive on the substrates (10, 11) after the debonding operation, which residues may need to be removed to enable the re-use or recycling of the substates. For this reason, the provision of the layers (20, 21) of the first adhesive in direct contact with one or more of the substrates (11, 12) is considered desirable.

The provision of two substrates (11, 12) has been illustrated in the figures for ease of description. It will be recognized that the configuration depicted in Figures 1 to 3 could actually be attained using a singular substrate: a single substrate may, for instance, be subjected to bending, incurvating, folding, pleating, twisting or other means of contortion in order to dispose opposite to one another the inner surfaces of distinct parts of that substrate.

Further, the articles (10) of Figure 1 to 3 are simplifications. The bonded article (10) to be treated may be provided in various forms, including bonded films, sheets, plates, fibrous non-woven sheets, fibrous woven sheets, cuboids, spheres, annuli, solid cylinders, tubes and wires: the provision of bonded articles in more complex, shaped forms - obtained by conventional techniques such as bending, blanking, casting, forging, rolling, welding and weaving - is of course not precluded.

As described above, the bonded article of the present disclosure comprises at least one layer (20, 21) of a first adhesive. Without intention to limit the present disclosure, it is preferred that said first adhesive is a polyurethane adhesive selected from aqueous polyurethane dispersion adhesives and polyurethane hot melt adhesives.

Suitable polyurethane hotmelts having utility in providing the first adhesive layer are unreactive thermoplasts which comprise the reaction product of: a) a polyisocyanate component; b) a polyol component; and, c) optionally a chain extender component. The hot-melt polyurethane adhesives should be substantially free of solvent: any solvent utilized in the reactive preparation process may be removed by conventional methods.

The polyurethane hotmelt adhesive is solid at room temperature but is meltable above room temperature. The polyurethanes are thereby applied as a melt to the substrate surface to be coated and permitted to recrystallize thereon to provide the layer(s) of first adhesive. In certain embodiments of the present disclosure, the polyurethane hotmelt adhesives should be characterized by one or both of: a melting point, as determined by Dynamic Mechanical Analysis (DMA) of from 60 to 180°C, for example from 80 to 160°C; and, a recrystallization time, as measured by Differential Scanning Calorimetry (DSC), of less than 10 minutes, for instance less than 5 minutes. The term *"recrystallization time"* references the amount of time between the peak of melting for the polyurethane hot-melt adhesive and the peak of recrystallization.

The aqueous polyurethane dispersion adhesives may be of a one-part (1K) or two-part (2K) type. Where the first adhesive is obtained by the curing of a one-part (1K) water-borne composition based on polyurethane, it is preferred that said one part (1K) composition comprises: an anionic polyurethane polymer having pendant hydroxyl groups; and, a blocked polyisocyanate. Prior to their application, such one part (1K) compositions must be prepared and stored under conditions which inhibit or prevent the activation of the blocked polyisocyanate. The constituent anionic polyurethane of the one part (1K) composition of this type may be prepared in the manner described herein below for the two-part (2K) water-borne composition.

### TWO-PART WATER-BORNE COMPOSITION

In important embodiments, the bonded article of the present disclosure contains at least one layer (20, 21) of a first adhesive which is obtained by the curing of a two-part water-borne composition based on polyurethane. More particularly, the two-part (2K) water-borne composition comprises:
p) a first part comprising:
   (pi) at least one anionic polyurethane polymer having pendant hydroxyl groups; and,
q) a second part comprising at least one polyisocyanate compound having pendant -NCO groups,
wherein the composition is characterized in that the molar ratio of active hydrogen atoms to -NCO groups in the composition is from 5:1 to 1:5. The or each anionic polyurethane polymer of the composition should desirably be water-dilutable.

As noted above, it is preferred that the two-part water-borne composition is used as a water-borne primer composition, thereby forming upon curing a debondable layer (20, 21) which directly contacts a substrate surface (11a, 12a).

### Part pi)

The production of polyurethane dispersions is known, as exemplified in U.S. Patent No. 4,237,264; U.S. Patent No. 4,408,008; U.S. Patent No. 5,569,706; U.S. Patent Publication No. 2004204559; U.S. Patent Publication No. 2005004367; GB Patent Publication 2386898; and, WO Publication 2005023947.

In the alternative, and as is known in the art, suitable polyurethanes may be obtained from the reaction of: i) at least one polyol; ii) optionally further active hydrogen compounds; and, iii) at least one polyisocyanate compound. To ensure that the polyurethane has no pendant isocyanate (NCO) groups, the equivalence of active hydrogen atoms to NCO groups of the reactants should be selected to ensure that no free NCO groups are present in the polyurethane: a molar ratio of active hydrogen atoms to isocyanate functional groups should therefore be at least 1:1, such as from 1.1:1 to 3:1 or 1.1:1 to 2:1.

As used herein, "*polyol*" refers to any compound comprising two or more hydroxyl groups: the term is thus intended to encompass diols, triols and compounds containing four or more -OH groups. Moreover, the at least one reactant polyol should herein be selected from the group consisting of: polyester polyols; polyether polyols; and, polycarbonate polyols. The polyol should preferably have a number average molecular weight (Mn) of from 1000 to 50,000 g/mol, for instance from 1000 to 25,000 g/mol. Alternatively or additionally to this molecular weight characterization, the hydroxyl number of the reactant polyol should preferably be from 20 to 850 mg KOH/g, for instance from 25 to 500 mg KOH/g.

Polycarbonate diols may be obtained by reacting carbonic acid derivatives with diols. Exemplary carbonic acid derivatives are diaryl carbonates including but not limited to diphenyl carbonate, di(C₁-C₆)alkyl carbonates and phosgene. Exemplary diols include but are not limited to: ethylene glycol; 1,2-propanediol; 1,3-propanediol; 1,3-butanediol; 1,4-butanediol; 1,5-pentanediol; 1,6-hexanediol; cyclohexane dimethanol; diethylene glycol; dipropylene glycol; neopentylglycol; and, mixtures thereof.

Polyester diols may be obtained by reacting diols with either aliphatic, aromatic or cycloaliphatic dicarboxylic acids or, in some circumstances, the corresponding anhydrides thereof: the reaction may optionally take place in the presence of an esterification catalyst. Examples of suitable dicarboxylic acids include but are not limited to: adipic acid; glutaric acid; pimelic acid; suberic acid; nonanedicarboxylic acid; decanedicarboxylic acid; succinic acid; maleic acid; sebacic acid; azelaic acid; terephthalic acid; isophthalic acid; o-phthalic acid; tetrahydrophthalic acid; hexahydrophthalic acid; trimellitic acid; and, 1,4-cyclohexanedicarboxylic acid. Examples of suitable anhydrides include succinic, o-phthalic and trimellitic anhydride. It is noted that various commercially available dimeric fatty acids in saturated (hydrogenated) or unsaturated form may also be used as the dicarboxylic acid. And examples of suitable diols for the preparation of the polyester diols are: ethanediol; di-, tri- or tetraethylene glycol; 1,2-propanediol; di-, tri-, tetrapropylene glycol; 1,3-propanediol; 1,4-butanediol; 1,3-butanediol; 2,3-butanediol; 1,6-hexanediol; 1,5-pentanediol; 2,2-dimethyl-1,3-propanediol (neopentylglycol); 1,4-dihydroxycyclohexane; 1,4-dimethylcyclohexane; 1,8-octanediol; 1,10-decanediol; 1,12-decanediol; 2,2,4- and/or 2,4,4-trimethyl-1,3-pentanediol; and, mixtures thereof.

Other useful polyester diols are those obtainable from diol initiated polymerization of hydroxycarboxylic acids containing from 2 to 12 carbon atoms or a lactone thereof. The hydroxycarboxylic acids may be saturated or unsaturated, linear or branched, of which example include: glycolic acid; lactic acid; 5-hydroxy valeric acid; 6-hydroxy caproic acid; ricinoleic acid; 12-hydroxy stearic acid; 12-hydroxydodecanoic acid; 5-hydroxydodecanoic acid; 5-hydroxydecanoic acid; and. 4-hydroxydecanoic acid. Examples of suitable lactones are β-propiolactone, δ-valerolactone, (C₁-C₆)alkyl-valerolactone, ε-caprolactone and (C₁-C₆)alkyl-ε-caprolactone.

The above aside, in certain embodiments the polyol from which the polyurethane is derived is a polyether polyol, in particular a polyether polyol having a polydispersity (PD) of less than 2, preferably less than 1.5, and more preferably less than 1.3. For completeness, a *"polyether"* is understood for purpose of the present disclosure as a polymer whose repeating unit contains ether functionalities C-O-C in the main chain. Polymers having lateral ether groups, such as cellulose ethers, starch ethers, and vinyl ether polymers, as well as polyacetals, are therefore not covered by this definition. Desirably, the polyether polyol is a polyoxyalkylene and in particular a polyoxy(C₂-C₃)alkylene.

As described in *inter alia* US Patent No. 3,905,929 and US Patent No. 3,920,598, the presence of polyoxy(C₂-C₃)alkylene chains in the reactant polyol can act to internally stabilize the polyurethane in dispersion. This can minimize or obviate the need to include emulsifiers within the dispersion to provide external stabilization of the polyurethane.

It is noted that at least one monol can in some embodiments be employed in synthesizing the polyurethane as a further active hydrogen reactant. For example, a mono-functional hydrophilic polyoxyalkylene - such as polyoxyethylene or polyoxpropylene - can be incorporated into the polyurethane as a means of modifying the properties of the latex and improving its ease of emulsion formation. When present, the monol is present in an amount of from 0.1 to 5 wt.%, based on the weight of reactants i) to iii).

To render the resultant polyurethane anionic and, where applicable, water-dispersible, the polymer is conventionally functionalized with at least one functional group selected from: carboxylic acid groups; anhydride groups; sulphonic acid groups; or, phosphoric acid groups. These functional groups may be included in the polyurethane by post-functionalization of the urethane linkage obtained from the reaction of the polyol(s) with polyisocyanate(s). More typically, these functional groups are introduced using functionalized reactant polyols, wherein the functional groups are (sterically) hindered from reacting with -NCO groups in yielding the polyurethane. Exemplary reactant diols include but are not limited to: dimethylolpropionic acid (DMPA); 2,2-di(hydroxymethyl) acetic acid; 2,2,2-tri(hydroxymethyl)acetic acid, 2,2-di-(-hydroxymethyl)propionic acid; 2,2-di(hydroxymethyl) butyric acid; 2,2-di(hydroxymethylpentanoic acid); 2,4-dihydroxy benzoic acid; trimellitic anhydride (TMA); and, sodium 4,4-dihydroxy-I-butane sulfonate.

As used herein *"polyisocyanate"* means a compound comprising at least two -N=C=O functional groups. The polyisocyanates suitable for the derivation of the hydroxyl functional polyurethane are those also described herein below with respect to part q) of the aqueous two-part composition.

To facilitate their inclusion in the compositions of the present disclosure, the at least one polyurethane may be initially provided as a dispersion, the particles of which dispersion may desirably be characterized by a mono-modal particle size distribution having a d₅₀ particle size of less than 1 micron, for instance of from 50 to 400 nm, as measured by dynamic light scattering.

The formation of a polyurethane dispersion in water may be achieved through: i) the first formation of a pre-polymer having free -NCO groups from the aforementioned reactants under anhydrous conditions or in the presence of an organic solvent; and, ii) the dispersion of the pre-polymer in the aqueous phase in either a continuous process of which high internal phase ratio (HIPR) process is an example or in a batch process of which an inverse phase process is an example. The reaction i) may be performed under catalysis and, for instance, at a temperature of from 25 to 100°C. The yielded pre-polymer should preferably be characterized by at least one of: i) an NCO content of from 5 to 30%, preferably from 10 to 25 wt.% based on the weight of the pre-polymer; ii) an NCO functionality of from 2.2 to 3.0, preferably from 2.2 or 2.4 to 2.9; iii) a viscosity at 20°C of from 300 to 35,000 mPa.s, preferably from 1,000 to 10,000 mPa.s; and, iv) a number average molecular weight (Mn) of from 500 to 30,000, for example from 500 to 15,000 or from 500 to 10,000 g/mol. For completeness, these characterizations i) to iv) are not intended to be mutually exclusive: indeed, the pre-polymer may meet one, two, three or four of these stated characterizations.

Standard polyurethane catalysts known in the art include: stannous salts of carboxylic acids, such as stannous octoate, stannous oleate, stannous acetate and stannous laureate; dialkyltin dicarboxylates, such as dibutyltin dilaureate and dibutyltin diacetate; tertiary amines; alkanolamine compounds; 2,3-dimethyl-3,4,5,6-tetrahydropyrimidine; tetraalkylammonium hydroxides; alkali metal hydroxides; alkali metal alcoholates; tin alkoxides, such as dibutyltin dimethoxide, dibutyltin diphenoxide and dibutyltin diisoproxide; tin oxides, such as dibutyltin oxide and dioctyltin oxide; the reaction products of dibutyltin oxides and phthalic acid esters; tin mercaptides; alkyl titanates; organoaluminum compounds such as aluminum trisacetylacetonate, aluminum trisethylacetoacetate and diisopropoxyaluminum ethylacetoacetate; chelate compounds such as zirconium tetraacetylacetonate and titanium tetraacetylacetonate; organosilicon titanium compounds; bismuth tris-2-ethylhexanoate; acid compounds such as phosphoric acid and p-toluenesulfonic acid; triphenylborane; triphenylphosphine; 1,8-diazabicycloundec-7-ene (DBU); 1,5-diazabicyclo[4.3.0]non-5-ene; 1,4-diazabicyclo[2.2.2]octane; 4-dimethylaminopyridine; 1,5,7-triazabicyclo[4.4.0]dec-5-ene; 7-methyl-1,5,7-triazabicyclo[4.4.0]dec-5-ene; 1,8-bis(tetramethylguanidino)naphthalene; and, 2-tert-butyl-1,1,3,3-tetramethylguanidine. Depending on the nature of the isocyanate, the amount of catalyst employed is typically in the range from 0.005 to 10% by weight of the mixture catalyzed.

As noted, the pre-polymer can optionally be made in the presence of a solvent and the solvent removed at least in part and preferably wholly either before or after the production of the aqueous dispersion. When a solvent is used, examples of solvents which are not reactive with the isocyanate include: ketones, such as acetone and butanone; ethers such as tetrahydrofuran, dioxane and dimethoxyethane; ether esters such as methoxypropyl acetate; (cyclic) amides and ureas such as dimethylformamide and dimethylacetamide; N,N'-dimethyl-2,5-dizapentanone; N-methylpyrrolidone; and, capped glycol ethers. Such solvents may be added at any stage of the pre-polymer preparation.

It is preferred that the aforementioned pre-polymers are extended with a chain extender. As known to the skilled artisan, typical chain extenders have a weight average molecular weight (Mw) of from 18 to 500 g/mol and have at least two active hydrogen containing groups. In particular, polyamines and / or water may be used as chain extenders with the mixture of water and polyamines being particularly preferred. As exemplary polyamines which may be used alone or in combination there may be mentioned: aminated polypropylene glycols such as Jeffamine D-400, available from Huntsman Chemical Company; hydrazine; piperazine; amino ethyl piperazine; 2-methyl piperazine; 1,5-diamino-3-methyl-pentane; isophorone diamine; ethylene diamine; diamino butane; hexane diamine; hexamethylene diamine; tetramethylene tetraamine; aminoethyl propyl trimethoxy silane; diethylene triamine; triethylene tetramine; triethylene pentamine; ethanolamine; and, lysine.

Where a chain extender other than water - as the dispersion medium - is used in preparing the anionic polyurethane polymers of the present disclosure, the equivalence of the active hydrogen provided by the chain extender to the NCO groups of the pre-polymer should be selected to ensure that no free NCO groups are present in the final polyurethane (pi)) as described above.

The anionic polyurethane (pi)) can be partially neutralized, totally neutralized or even over-neutralized with inorganic or organic bases. Exemplary bases include: amine bases, as identified herein below; alkali metal hydroxides; ammonia; and, phosphines. The degree of neutralization of the anionic functions of the polyurethane may be from 0 to 150%, for example from 25 to 125% or from 50 to 100%. A degree of neutralization in excess of 100% indicates that a stoichiometric excess of basic functional groups is present relative to the anionic groups.

Suitable polyurethanes for use herein are commercially available and an example thereof includes Dispercoll U56, available from Covestro AG.

### Part q) Curative Containing Polyisocyanate

The second part of the water-borne composition comprises at least one polyisocyanate compound having pendant -N=C=O (*hereinafter -NCO*) groups which act as a crosslinker through reaction with pendant hydroxyl groups provided by the first part of the composition. It is not precluded that the composition may comprise blocked isocyanates as supplementary crosslinkers to the polyisocyanate compound(s) having pendant -NCO groups. However, the use of such blocked polyisocyanate co-crosslinkers is not preferred and thereby, in certain embodiments, the composition may be characterized as being substantially free of said blocked isocyanates.

The two-part (2K) water-borne composition may comprise polyisocyanates in an amount such that the composition is characterized by a molar ratio of active hydrogen atoms to -NCO groups of from 5:1 to 1:5, for example from 3:1 to 1:3 or from 2:1 to 1:2. For surety the term *"-NCO groups"* includes blocked -NCO groups which are therefore included in the molar ratio term.

The polyisocyanate will comprise at least two -NCO functional groups, for example from 2 to 5 or from 2 to 4 -NCO functional groups. Suitable polyisocyanates include aliphatic, cycloaliphatic, aromatic and heterocyclic isocyanates, dimers and trimers thereof, and mixtures thereof.

Aliphatic and cycloaliphatic polyisocyanates can comprise from 6 to 100 carbon atoms linked in a straight chain or cyclized and having at least two isocyanate reactive groups. Examples of suitable aliphatic isocyanates include but are not limited to straight chain isocyanates such as ethylene diisocyanate, trimethylene diisocyanate, tetramethylene diisocyanate, 1,6-hexamethylene diisocyanate (HDI), octamethylene diisocyanate, nonamethylene diisocyanate, decamethylene diisocyanate, 1,6,11-undecanetriisocyanate, 1,3,6- hexamethylene triisocyanate, bis(isocyanatoethyl)-carbonate, and bis (isocyanatoethyl) ether. Exemplary cycloaliphatic polyisocyanates include, but are not limited to, dicyclohexylmethane 4,4'-diisocyanate (H₁₂MDI), 1-isocyanatomethyl-3-isocyanato-1,5,5-trimethyl-cyclohexane (isophorone diisocyanate, IPDI), cyclohexane 1,4-diisocyanate, hydrogenated xylylene diisocyanate (H₆XDI), 1-methyl-2,4-diisocyanato-cyclohexane, m- or p-tetramethylxylene diisocyanate (m-TMXDI, p-TMXDI) and dimer fatty acid diisocyanate.

The term *"aromatic polyisocyanate"* is used herein to describe organic isocyanates in which the isocyanate groups are directly attached to the ring(s) of a mono- or polynuclear aromatic hydrocarbon group. In turn the mono- or polynuclear aromatic hydrocarbon group means an essentially planar cyclic hydrocarbon moiety of conjugated double bonds, which may be a single ring or may include multiple condensed (fused) or covalently linked rings. The term aromatic also includes alkylaryl. Typically, the hydrocarbon (main) chain includes 5, 6, 7 or 8 main chain atoms in one cycle. Examples of such planar cyclic hydrocarbon moieties include, but are not limited to, cyclopentadienyl, phenyl, napthalenyl-, [10]annulenyl-(1,3,5,7,9-cyclodecapentaenyl-), [12]annulenyl-, [8]annulenyl-, phenalene (perinaphthene), 1,9-dihydropyrene, chrysene (1,2-benzophenanthrene). Examples of alkylaryl moieties are benzyl, phenethyl, 1-phenylpropyl, 2-phenylpropyl, 3-phenylpropyl, 1-naphthylpropyl, 2-naphthylpropyl, 3-naphthylpropyl and 3-naphthylbutyl.

Exemplary aromatic polyisocyanates include, but are not limited to: all isomers of toluene diisocyanate (TDI), either in the isomerically pure form or as a mixture of several isomers; naphthalene 1,5-diisocyanate; diphenylmethane 4,4'-diisocyanate (MDI); diphenylmethane 2,4'-diisocyanate and mixtures of diphenylmethane 4,4'-diisocyanate with the 2,4' isomer or mixtures thereof with oligomers of higher functionality (so-called crude MDI); xylylene diisocyanate (XDI); diphenyl-dimethylmethane 4,4'-diisocyanate; di- and tetraalkyl-diphenylmethane diisocyanates; dibenzyl 4,4'-diisocyanate; phenylene 1,3-diisocyanate; and, phenylene 1,4-diisocyanate.

The polyisocyanates, where required, may have been biuretized, allophanated and / or isocyanurated by generally known methods, such as described in UK Patent No. 889,050. In use, such derivatives may be substantially free of the parent diisocyanate: the derivatives may have been separated from any excess parent diisocyanate by conventional means, including but not limited to distillation.

It is also noted that the term *"polyisocyanate"* is intended to encompass pre-polymers formed by the partial reaction of the aforementioned aliphatic, cycloaliphatic, aromatic and heterocyclic isocyanates with polyols - such as polyether polyols or polyester polyols - to give isocyanate functional oligomers, which oligomers may be used alone or in combination with free isocyanate(s). However, it is preferred herein that part q) comprises, based on the weight of said part, less than 5 wt.% of said pre-polymers. For instance, part q) may comprise, based on the weight of said part, less than 1 wt.% of said pre-polymers or may be substantially free of said pre-polymers.

### Additives and Adjuncts of the Compositions of the First Adhesive

The compositions which provide the first adhesive of the present disclosure - as exemplified by the two-part (2K) water-borne composition - will typically further comprise adjuvants and additives that can impart improved properties to these compositions. For instance, the adjuvants and additives may impart one or more of: improved adhesion to substrates; reduced corrosivity towards the substrate surface; improved elastic properties; improved elastic recovery; longer enabled processing time; faster curing time; lower residual tack and, improved levelling. Included among such adjuvants and additives are: adhesion promoters; corrosion inhibitors; catalysts; cure retarders; surfactants, for which a preference for non-ionic surfactants may be mentioned; wetting agents; plasticizers; stabilizers; tougheners; rheology control agents; biocides; flame retardants; colorants; organic co-solvents; and, non-reactive diluents.

Such adjuvants and additives can be used in such combination and proportions as desired, provided they do not adversely affect the nature and essential properties of the composition. While exceptions may exist in some cases, these adjuvants and additives should not *in toto* comprise more than 50 wt.% of the total composition and preferably should not comprise more than 20 wt.% of the composition.

For completeness, it is noted that, in general, adjunct materials and additives which contain reactive groups will be blended into the appropriate part of a two-part (2K) composition to ensure the storage stability thereof. Unreactive materials may be formulated into either or both of the two parts.

The aqueous polyurethane dispersion adhesives - as exemplified by the two-part (2K) compositions herein above - may comprise one or more catalysts for the reaction of -NCO groups with active hydrogen compounds. Standard catalysts known in the art include: stannous salts of carboxylic acids, such as stannous octoate, stannous oleate, stannous acetate and stannous laureate; dialkyltin dicarboxylates, such as dibutyltin dilaureate and dibutyltin diacetate; tertiary amines; alkanolamine compounds; 2,3-dimethyl-3,4,5,6-tetrahydropyrimidine; tetraalkylammonium hydroxides; alkali metal hydroxides; alkali metal alcoholates; tin alkoxides, such as dibutyltin dimethoxide, dibutyltin diphenoxide and dibutyltin diisoproxide; tin oxides, such as dibutyltin oxide and dioctyltin oxide; the reaction products of dibutyltin oxides and phthalic acid esters; tin mercaptides; alkyl titanates; organoaluminum compounds such as aluminum trisacetylacetonate, aluminum trisethylacetoacetate and diisopropoxyaluminum ethylacetoacetate; chelate compounds such as zirconium tetraacetylacetonate and titanium tetraacetylacetonate; organosilicon titanium compounds; bismuth tris-2-ethylhexanoate; acid compounds such as phosphoric acid and p-toluenesulfonic acid; triphenylborane; triphenylphosphine; 1,8-diazabicycloundec-7-ene (DBU); 1,5-diazabicyclo[4.3.0]non-5-ene; 1,4-diazabicyclo[2.2.2]octane; 4-dimethylaminopyridine; 1,5,7-triazabicyclo[4.4.0]dec-5-ene; 7-methyl-1,5,7-triazabicyclo[4.4.0]dec-5-ene; 1,8-bis(tetramethylguanidino)naphthalene; and, 2-tert-butyl-1,1,3,3-tetramethylguanidine. Depending on the nature of the polyisocyanate, the amount of catalyst employed in the two-part (2K) composition is typically in the range from 0.005 to 2% by weight of the composition.

The addition of certain additives may promote the adhesion of the first adhesive composition to particular substrates. For instance, in an embodiment, the two-part (2K) water-borne composition may comprise from 0 to 5 wt.%, for example from 0.5 to 5 wt.% based on the weight of the composition, of an adhesion promoter. Exemplary adhesion promoters include but are not limited to: morin(2-(2,4-dihydroxy phenyl)-3,5,7-trihydroxy-4H-1-cumarone-4-ketone); 3,7-dihydroxy-2-naphthoic acid (3,7-dihydroxy naphthlene-2-carboxylic acid); pyrogallol carboxylic acid (2,3,4-trihydroxybenzoic acid); 3,4-dihydroxy-benzene guanidine-acetic acid; gallic acid (3,4,5-trihydroxybenzoic acid); para-aminosalicylic acid (4-amino-2-hydroxybenzoic acid, PAS); flutter acid (4,4'-methylene-bis(3-hydroxy-2-naphthoic acid)); and, citric acid (2-hydroxypropane-1,2,3-tricarboxylic acid). Of these compounds a preference for the use - alone or in combination - of citric acid, gallic acid and, in particular, para-aminosalicylic acid (PAS) may be mentioned.

A corrosion inhibitor may be included in the first adhesive in an amount up to 5 wt.%, based on the weight of the adhesive. For instance, in an embodiment, the two-part (2K) water-borne composition may comprise from 0.1 to 2 wt.%, for instance from 0.1 to 1 wt.% of corrosion inhibitor, based on the weight of the composition. Exemplary corrosion inhibitors, which may be present alone or in combination in the composition, include salts of alkali metals, alkaline earth metals and transition metals, such as titanium, chromium and zinc. Mention may be made of: magnesium oxide, magnesium hydroxide; magnesium carbonate; magnesium phosphate; magnesium silicate; zinc oxide; zinc hydroxide; zinc carbonate; zinc phosphate; and, zinc silicate.

Exemplary tougheners may be selected from: epoxy-elastomer adducts; and, toughening rubber in the form of dispersed core-shell particles which do not possess pendant reactive groups. In certain embodiments, tougheners may be included in the two-part (2K) water-borne composition in an amount up to 10 wt.%, based on the weight of the composition.

It will be appreciated that the polyurethane polymers may provide all of the film-forming polymer of the aforementioned aqueous polyurethane dispersions, as exemplified by the two-part (2K) water-borne composition. However the presence of further film forming resins is not precluded. For instance, the two-part (2K) water-borne composition may, in certain embodiments, comprise up to 25 wt.% *in toto,* based on the solids content of the composition, of one or more supplementary film-forming resins. Any such supplementary film-forming resins included in the first adhesive may be thermosetting or thermoplastic but should be either dispersible, emulsifiable or soluble in water.

The rheology control agent which optionally has utility in the first adhesive may comprise fillers, thickeners and combinations thereof. The total amount of rheology control agent in the first adhesive should not generally exceed 10 wt.%, based on the weight of the adhesive. For instance, the two-part (2K) water-borne composition may comprise from 0 to 5 wt.%, from 0 to 2 wt.% or even from 0 to 1 wt.% of rheology control agent, based on the weight of the composition.

Exemplary thickeners include but are not limited to: clay based thickeners, such as organoclays; polysaccharides, such as guar and xanthan; polyacrylates; and, associative thickeners. Mention may, in particular, be made of the use as a polysaccharide thickener of cellulose or cellulose derivatives, such as: carboxymethylcellulose; methylcellulose; hydroxyethylcellulose; hydroxyethylmethylcellulose; hydroxypropylmethylcellulose; cellulose nanofibers; and, cellulose nanocrystals.

Broadly, there is no particular intention to limit the shape of the particles employed as fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as fillers. However, such fillers will conventionally have an d₅₀ particle size, as measured by dynamic light scattering, of from 0.1 to 1500 µm, for example from 1 to 1250 µm.

Exemplary fillers include but are not limited to calcium carbonate, calcium oxide, calcium hydroxide (lime powder), precipitated and/or pyrogenic silica, zeolites, bentonites, wollastonite, magnesium carbonate, diatomite, barium sulfate, aluminum oxide, aluminium silicate, clay, talc, titanium oxide, iron oxide, zinc oxide, sand, quartz, flint, mica, glass beads, glass powder, and other ground mineral substances. Organic fillers can also be used, in particular wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added.

When present, pyrogenic and/or precipitated silica should desirably have a BET specific surface area of from 10 to 90 m²/g. When they are used, they do not cause any additional increase in the viscosity of the composition according to the present disclosure, but do contribute to strengthening the cured composition.

It is likewise conceivable to use pyrogenic and/or precipitated silica having a higher BET specific surface area, advantageously from 100 to 250 m²/g as a filler: because of the greater BET surface area, the effect of strengthening the cured composition is achieved with a smaller proportion by weight of silicic acid.

Also suitable as fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Fillers which impart thixotropy to the composition may be preferred for many applications: such fillers are also described as rheological adjuvants, e.g. hydrogenated castor oil, fatty acid amides, or swellable plastics such as PVC.

A *"plasticizer"* for the purposes of this disclosure is a substance that decreases the viscosity of a composition and thus facilitates its processability. Herein the plasticizer may constitute up to 10 wt.% or up to 5 wt.%, based on the weight of the adhesive. For instance, the two-part (2K) water-borne composition may comprise from 0 to 5 wt.% or from 0 to 2 wt.% of plasticizer, based on the weight of the composition. Suitable plasticizers are preferably selected from the group consisting of: diurethanes; ethers of monofunctional, linear or branched C₄-C₁₆ alcohols, such as Cetiol OE (obtainable from Cognis Deutschland GmbH, Düsseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

*"Stabilizers"* for purposes of this disclosure are to be understood as antioxidants, UV stabilizers, thermal stabilizers or hydrolysis stabilizers. Herein stabilizers may constitute *in toto* up to 10 wt.% or up to 5 wt.%, based on the total weight of the first adhesive. For instance, the two-part (2K) water-borne composition may comprise from 0 to 5 wt.% or from 0 to 2 wt.% of stabilizer, based on the weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

The term "*colorant*" as used herein refers to any substance that imparts one or more of color, opacity or a visual effect to the composition. Visual effects which may be imparted to the composition by the colorant, in addition to or independently of color, include: reflectance; pearlescence; sheen; texture; phosphorescence; fluorescence; photochromism; photosensitivity; thermochromism; and, goniochromism. The term "*colorant*" is intended to encompass: organic pigments; inorganic pigments; dyes; and, tints. More than one colorant may be included in the composition and it is considered that each added colorant can independently be added in any suitable form, of which mention may be made of discrete particles, dispersions and solutions.

As noted above, the polyurethane dispersion adhesives - of which the two-part (2K) water-borne composition is an important example - are aqueous and thus predominantly contain water as the solvent or as the continuous phase of a dispersion. In certain embodiments, however, the first adhesive is obtained from an one-part (1K) or two-part (2K) water-borne composition based on polyurethane, which composition further comprises organic co-solvents and / or non-reactive diluents where these can usefully moderate the viscosity of the composition. Exemplary co-solvents and non-reactive diluents include but are not limited to: aromatic solvents, such as xylene, toluene and cumene; ether solvents such as ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol monomethyl ether; dipropylene glycol dimethyl ether; dipropylene glycoldi-n-butyl ether; petroleum fractions such as naphtha and Solvesso^{®} products (available from Exxon); acetates, including glycol ether acetates; propionates, such as ethyl 3-ethoxypropionate; adipates; sebacates; phthalates; benzoates; organic phosphoric or sulfonic acid esters; and sulfonamides.

The above aside, it is preferred that said non-reactive diluents and co-solvents constitute *in toto* less than 5 wt.%, in particular less than 2 wt.%, based on the total weight of the above described two-part (2K) water-borne composition based on polyurethane.

### Formation of the Two-part (2K) Water-Borne Composition

The two-part (2K) water-borne compositions are formulated by simple mixing of the various components as well as any adjunct ingredients. Whilst the order of mixing of the components is not intended to be limited, it may be prudent to first form an aqueous dispersion of the polyurethane before mixing the further components. In this scenario, the aqueous dispersions of the polyurethane may, for example, each be prepared at a solids content of from 20 to 60 wt.% or from 30 to 60 wt.%.

If necessary, the two-part (2K) water-borne composition may be prepared well in advance of its application. However, in an interesting alternative embodiment, a concentrated composition may first be obtained by mixing components with only a fraction of the water that would be present in the water-borne composition as applied: the concentrated composition may then be diluted with the remaining water shortly before its application. It is considered that such concentrated compositions may be prepared and stored as either single-package concentrates - that can be converted by dilution with water only - or as multi-part concentrates, two or more of which must be combined and diluted to form a complete working composition according to the disclosure. Any dilution can be effected simply by the addition of water, in particular deionized and / or demineralized water, under mixing.

The composition might equally be prepared within a rinse stream whereby one or more streams of the concentrate(s) is injected into a continuous stream of water.

Without specific intention to limit the amount of water included in the compositions, it is preferred that the water-borne compositions contain from 5 to 50 wt.%, preferably from 5 to 40 wt.%, based on the weight of the composition, of water. In an alternative but not mutually exclusive characterization, the composition may be defined by a viscosity of from 0.1 to 10 Pa.s, for instance from 0.5 to 5 Pa.s, as measured using a Brookfield viscometer at 25°C.

### METHODS OF FORMING THE BONDED ARTICLE

Most broadly, the bonded articles are formed by: applying the aforementioned layers of the first and second adhesives to two distinct surfaces of the substrate or substrates; and, contacting the surfaces with the applied adhesive layers disposed therebetween under pressure to form the bond.

The adhesive composition which is to provide the first adhesive layer (20, 21) - such as the above described two-part (2K) water-borne composition based on polyurethane - is applied to the substrate surface(s) and then cured or solidified *in situ.* Prior to applying the compositions, it is often advisable to pre-treat the relevant surfaces. Any such pre-treatment should comprise at least one of: cleaning the surface(s); abrading the surface(s); and, applying an anti-corrosion coating or applying a conversion coating or conversion treatment thereto.

Cleaning serves to remove foreign matter from the surface. Cleaning treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as carbon tetrachloride or trichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

The terms *"conversion coating"* and *"conversion* "*treatment*" refer to a treatment of the surface of a substrate which causes the surface material to be chemically converted to a different material. Typically, a metal or alloyed surface, presenting the defect area, is chemically converted to provide a tightly adherent coating, all or part of which consists of a stabilized form - for instance an oxidized form - of the substrate metal. Such chemical conversion coatings can demonstrate high corrosion resistance as well as providing a strong bonding affinity for subsequent coating layers.

The compositions are then applied to the preferably pre-treated surfaces of the substrate by conventional application methods such as: brushing; roll coating; doctor-blade application; printing methods; and, spraying methods, including but not limited to air-atomized spray, air-assisted spray, airless spray and high-volume low-pressure spray.

It is recommended that the first adhesive compositions - as exemplified by the two-part (2K) water-borne compositions - be applied to a surface at a wet film thickness of from 10 to 1000 µm, for example from 10 to 750 µm. The application of thinner layers within this range is more economical and provides for a reduced likelihood of deleterious thick cured regions. However, great control must be exercised in applying thinner coatings or layers so as to avoid the formation of discontinuous cured films.

The curing of the applied water borne compositions of the disclosure typically occurs at temperatures in the range of from 20°C to 120°C, preferably from 20°C to 120°C, and in particular from 20°C to 80°C. The temperature that is suitable depends on the specific compounds present and the desired drying and curing rate and can be determined in the individual case by the skilled artisan, using simple preliminary tests if necessary. Of course, drying and curing at lower temperatures within the aforementioned ranges is advantageous as it obviates the requirement to substantially heat or cool the mixture from the usually prevailing ambient temperature. Where applicable, however, the temperature of the mixture formed from the respective elements of the composition may be raised above the mixing temperature and / or the application temperature using conventional means including microwave induction, ovens and drying booth. The elevated temperature may be maintained for up to 60 minutes to ensure complete curing.

The coating method of the present disclosure may further comprise reducing the oxygen content in the environment of the curing material: this may done by introducing nitrogen (N₂) gas into the curing environment. This step is however not necessary for the formation of a robust coating.

The cured composition should fill the defect area and any further minor flaws in the surface of the substrate and thereby present a smooth surface for the application of subsequent adhesive layer(s). It is not precluded that the composition of the present application may be applied in a number of coats, which are independently cured, to attain the desired layer thickness and to cover surface imperfections.

For completeness, the present disclosure also concerns a method of disposing multiple layers of adhesive between the substrate(s) to be bonded. The method comprises, as one of the constituent steps, the application of the two-part (2K) water-borne polyurethane composition as defined hereinabove to at least one substrate surface as a primer. More particularly, the method of preparing the multilayer adhesive will conventionally incorporate the steps of: i) providing a metallic substrate; ii) applying a first layer of a two-part (2K) water-borne polyurethane composition as defined hereinabove onto said metallic substrate; iii) at least partially curing that first layer; iv) applying a second layer of a second curable adhesive composition on the at least partially cured first layer; and, v) at least partially curing that second layer. In an iterative process, steps ii) to v) may be performed and repeated so as to dispose third, fourth and further layers on the metallic substrate. There is no particular intention to limit the type of adhesive compositions which may be applied in step iv): both water-borne and solvent borne adhesive compositions are envisaged.

As used herein, the term *"at least partially cured"* means that curing of the curable composition has been initiated and that, for example, cross-linking of components of the composition has commenced. The term encompasses any amount of cure upon application of the curing condition, from the formation of a single cross-link to a fully cross-linked state. Obviously, the rate and mechanism with which the composition cures is contingent on various factors, including the components thereof, functional groups of the components and the parameters of the curing condition.

At least partial solidification of a given adhesive layer is generally indicative of cure or drying. However, both drying and cure may be indicated in other ways including, for instance, a viscosity change of the adhesive layer, an increased temperature of the adhesive layer and / or an opacity change of that adhesive layer.

It may be desirable for the or each step iv) of the above described application process to be commenced only when the at least partially cured or partially dried preceding layer can substantially retain its shape upon exposure to ambient conditions. By *"substantially retain its shape"* is meant that at least 50% by volume, and more usually at least 80% or 90% by volume of the at least partially cured or dried layer retains its shape and does not flow or deform upon exposure to ambient conditions for a period of 5 minutes. Under such circumstances, gravity should not therefore substantially impact the shape of the at least partially cured or partially dried layer upon exposure to ambient conditions.

For completeness, the shape of the at least partially dried or at least partially cured layer will impact whether said layer substantially retains its shape. For example, when said layer is rectangular or has another simplistic shape, the at least partially cured or dried layer may be more resistant to deformation at even lesser levels of cure or even lesser degrees of drying than layers having more complex shapes.

In certain embodiments, the application of a subsequent adhesive layer *(step iv))* occurs before an at least partially cured layer has reached a final cured state, nominatively while the layer is still *"green".* In such embodiments, application of the layers may be considered "*wet-on-wet*" such that the adjacent layers at least physically bond, and may also chemically bond, to one another. For example, it is possible that components in each of the first and subsequent layers can chemically cross-link/cure across the application line, which effect can be beneficial to the longevity, durability and appearance of the finished article. Importantly, the distinction between partial cure and a final cured state is whether the partially cured layer can undergo further curing or cross-linking. This does not actually preclude functional groups being present in the final cure state but such groups may remain un-reacted due to steric hindrance or other factors.

In the aforementioned iterative process, the thickness, width, shape and continuity of each layer may be independently selected such that the or each preceding and subsequent layer may be the same or different from one another in one or more of these regards. For example, a given subsequent layer may only contact a portion of an exposed surface of the at least partially cured or dried preceding layer: depending on the desired shape of the adhesive layer, the subsequent layer may build on that layer selectively.

### B) DEBONDING SOLUTION

The debonding solution of the present disclosure has a pH of from 3 to 14 and comprises:
i) at least one compound selected from the group consisting of: C₁₀ to C₂₆ fatty acid; C₁₀ to C₂₆ fatty acid salts; and, C₁-C₄ alkyl esters of C₁₀ to C₂₆ fatty acids; and,
ii) a polar solvent,

### i) Fatty Acid and Esters Thereof

As noted above, the solution necessarily comprises i) at least one compound selected from the group consisting of: C₁₀ to C₂₆ fatty acid; C₁₀ to C₂₆ fatty acid salts; and, C₁-C₄ alkyl esters of C₁₀ to C₂₆ fatty acids. The solution should desirably comprise, based on the weight of the solution, from 5 to 30 wt.% of i) said at least one compound. And exemplary solutions may comprise from 5 to 25 wt.% or from 10 to 25 wt.% of i) said least one compound.

The constituent fatty acid of the solution or, where applicable, the fatty acid from which the or each ester is derived, may be a saturated, mono-unsaturated or polyunsaturated linear, aliphatic acid of which examples include: decanoic acid (*capric acid*)*;* dodecanoic acid (*lauric acid*)*,* tetradecanoic acid (*myristic acid*)*;* pentadecanoic acid; hexadecanoic acid (*palmitic acid*); heptadecanoic acid (*margaric acid)*; octadecanoic acid (stearic acid or isostearic acid); octadecenoic acids (*oleic acid, linoleic acid* or *linolenic acid*); hydroxyoctadecenoic acid (*ricinoleic acid*); eicosanoic acid (*arachidic acid*); and, docosanoic acid (*behenic acid*)*.*

A preference may be noted for the use in the solution of C₁₄-C₂₀ monounsaturated fatty acids and / or the C₁-C₄ alkyl esters thereof. Independently of or additional to this preferred selection of the fatty acid, a preference may also be noted for the use of C₁-C₂ alkyl esters and, more particularly, methyl esters.

In an important embodiment, part i) of the solution comprises or consists of at least one compound selected from the group consisting of C₁₆-C₁₈ monounsaturated fatty acids and C₁-C₄ alkyl esters of C₁₆-C₁₈ monounsaturated fatty acids. Good results have been obtained where part i) of the composition comprises or consists of at least one compound selected from the group consisting of oleic acid and C₁-C₄ alkyl esters of oleic acid. For example, the composition may comprise or consist of at least one compound selected from the group consisting of oleic acid and C₁-C₂ alkyl esters. The use of oleic acid and / or methyl oleate as or in part i) of the solution may be particularly beneficial.

It will be recognized that fatty acids are normally obtained by the hydrolysis of naturally occurring triglycerides, such as coconut oil, rape seed oil, palm oils, tallow, lard and fish oils. The hydrolysis yields mixtures of fatty acids, which mixtures could have utility *per se* in the present debonding solution. However, where specific individual fatty acids are required as components of the solution - such as oleic acid for example - those acids may be obtained from the technical mixtures by an appropriate separation step, such as distillation, nanofiltration, membrane separation and separation via ion exchange resin.

### ii) Polar Solvent

The debonding solution comprises polar solvent. Exemplary compounds which may constitute the polar solvent, either independently or in combination, include but are not limited to: water; C₁-C₈ alkanols, such as ethanol; benzyl alcohol; acetonitrile; N,N-di(C₁-C₄)alkylacylamides, such as N,N-dimethylformamide (DMF) and N,N-dimethylacetamide (DMAc); hexamethylphosphoramide; N-methylpyrrolidone; pyridine; mono-C₁₋₄-alkyl ethers of diols having from 2 to 12 carbon atoms, such as ethylene glycol mono-(C₁-C₄)-alkyl ethers, propylene glycol mono-(C₁-C₄)alkyl ethers and in particular ethylene glycol monomethyl ether, ethylene glycol monobutyl ether, propylene glycol monomethyl ether, propylene glycol monopropyl ether, propylene glycol monobutyl ether; di(C₂-C₃)alkylene glycol mono-(C₁-C₄)alkyl ethers, such as diethylene glycol monomethyl ether, diethylene monobutyl ether, dipropylene glycol n-propyl ether, dipropylene glycol monopropyl ether and dipropylene glycol monobutyl ether; polyalkylene glycol dialkyl ethers; monoesters, such as (C₁-C₈)alkyl acetates, ethoxydiglycol acetate, ethyl lactate, benzyl benzoate, butyloctyl benzoate and ethylhexyl benzoate; dibasic esters such as dimethyl succinate, dimethyl glutarate, dimethyl maleate, dimethyl adipate, dipropyl oxalate; ketones, such as acetone, ethyl ketone, methyl ethyl ketone (*2-butanone*) and methyl isobutyl ketone; ethers, such as tetrahydrofuran (THF), 2-methyltetrahydrofuran (2-MeTHF) and 1,2-dimethoxyethane; 1,3-dioxolane; dimethylsulfoxide (DMSO); and, dichloromethane (DCM).

Good results have been obtained where the polar solvent comprises or consists of at least one compound selected from the group consisting of: water; polyalkylene glycol dialkyl ethers, in particular diethylene glycol dimethyl ether (*diglyme*) or dipropylene glycol dimethyl ether (DPGDME); and, dibasic esters. For completeness, an exemplary commercial dibasic ester solvent is Imsol R, a mixture of dimethyl succinate, dimethyl glutarate and dimethyl adipate, available from Invista.

### iii) pH Control Agent

As noted above, the debonding solution should possess a pH of from 3 to 14, preferably from 3 to 7 or from 3 to 6. A pH control agent represents an optional ingredient of the debonding solution, whereby the pH of the debonding solution is determinative of any added amount of pH control agent. Broadly, the pH control agent is selected from acidic substances and basic substances. For surety, an added pH control agent is distinct from component i) of the solution.

Exemplary acidic substances, which may be added alone or in combination, include, but are not limited to: mineral acids; monocarboxylic acids of the formula R^{m}CO₂H, wherein R^{m} is C₁-C₆ alkyl or C₃-C₆ cycloalkyl group; polycarboxylic acids of the formula R^{p}(CO₂H)ₙ, wherein n is 2 or 3 and R^{p} is C₁-C₆ alkylene or C₃-C₆ alkylene; and, α-hydroxycarboxylic acid(s).

Having regard to mineral acids, the use of nitric acid is not precluded but is not preferred; conversely, the addition of at least one of phosphoric acid, phosphonic acid, sulphurous acid, sulphuric acid, hydrochloric acid and hydrobromic acid is considered to be suitable.

Non-limiting examples of monocarboxylic acids include: formic acid; acetic acid; propionic acid; butyric acid; valeric acid; hexanoic acid; cyclohexanecarboxylic acid; cyclopentanecarboxylic acid; and, cyclobutanecarboxylic acid. Formic acid, acetic acid and propionic acid are considered particularly suitable for use herein.

Illustrative α-hydroxycarboxylic acids are those represented by the general formula (III):

R^{h}CH(OH)COOH (III)

wherein: R^{h} represents a hydrogen atom, a C₁-C₄ alkyl group, a C₂-C₆ alkenyl group, a C₁-C₆ alkoxy group, a C₃-C₆ cycloalkyl group or a C₆-C₁₀ aryl group.

Suitable α-hydroxycarboxylic acids include but are not limited to: glycolic acid; lactic acid (*2-hydroxypropanoic acid*)*;* 2-hydroxybutanoic acid; 2-hydroxypentanoic acid; 2-hydroxyhexanoic acid; glucuronic acid; citric acid; mandelic acid; galacturonic acid; ribonic acid (*2,3,4,5-tetrahydroxypentanoic acid*)*;* gluconic acid (*2S,3S,4R,5S)-2,3,4,5,6-pentahydroxyhexanoic acid*)*;* tartronic acid; tartaric acid; and, malic acid.

Exemplary basic compounds, which may be added to the debonding solution alone or in combination, include, but are not limited to: amine bases; alkali metals; alkaline earth metals; alkali metal (C₁-C₄)alkoxides; alkaline earth metal (C₁-C₄) alkoxides; alkali metal carbonates; alkaline earth metal carbonates; alkali metal hydroxides; alkaline earth metal hydroxides; alkali metal hydrides; and, alkaline earth metal hydrides.

The term *"amine base"* as used herein includes to reference: ammonia (NH₃); primary amines (NH₂R^{a}); secondary amines (NHR^{a}R^{b}); and, tertiary amines (NR^{a}R^{b}R^{c}), wherein R^{a}, R^{b} and R^{c} are each independently selected from alkyl, hydroxyalkyl, cycloalkyl, alkenyl, cycloalkenyl, aryl, alkaryl, aralkyl and heteroaryl or wherein R^{a} and R^{b} together may form a carbocyclic or heterocyclic ring.

In accordance with embodiments of the disclosure, the pH control agent comprises at least one amine base selected from the group consisting of: ammonia; primary amines of the formula (NH₂R^{a}); secondary amines of the formula NHR^{a}R^{b}; and, tertiary amines of the formula NR^{a}R^{b}R^{c}, wherein R^{a}, R^{b} and R^{c} are each independently selected from C₁-C₆ alkyl, C₁-C₆ hydroxyalkyl, C₃-C₆ cycloalkyl, or C₆-C₁₈ aryl, or wherein R^{a} and R^{b} together form a carbocyclic or heterocyclic ring having from 4 to 8 constituent atoms.

Exemplary amine bases having utility herein include: methylamine; ethylamine; propylamine; n-butylamine; dimethylamine; diethylamine; triethylamine; cyclohexylamine; N,N-diethylethanolamine; diethanolamine; triethanolamine; aniline, p-chloroaniline; N,N-dimethylaniline; benzylamine; piperidine; piperazine, 1-methylpiperazine, 1,4-dimethylpiperazine, and, imidazole.

An aqueous debonding solution may, in certain circumstances, contain a water-soluble buffer which serves to maintain the solution within a desired pH range, which range will be determined by the operative pH of the debonding treatment. For example, the following water-soluble buffers may have utility herein: for the maintenance of a pH of from 4 to 5.5, an acetate buffer; for the maintenance of a pH of from 6 to 8, a phosphate buffer; and, for the maintenance of a pH of 9, a glycine-sodium hydroxide buffer. With regard to an operating pH of from 6 to 8, suitable phosphate buffers include, but are not limited to: sodium phosphate; potassium phosphate; orthophosphoric acid (H₃PO₄); ammonium phosphate (NH₄H₂PO₄); and, ammonium phosphate, dibasic ((NH₄)₂HPO₄).

The amount of water-soluble buffer added to the aqueous debonding solution should be effective to maintain the pH in the desired pH range. For instance, the water-soluble buffer may be added to the slurry in an amount of from 1 to 1000 ppm by weight or from 1 to 500 ppm by weight, based on the total weight of the aqueous slurry.

### iv) Surfactants

The present debonding solutions may optionally comprise at least one surfactant selected from: anionic surfactants; cationic surfactants; zwitterionic surfactants; non-ionic surfactants; and, mixtures thereof. The solution may, for example, comprise *in toto* from 0.5 to 50 wt.% or from 0.5 to 40 wt.%, of surfactants, based on the total weight of the composition. For surety, said at least one surfactant is distinct from component i) of the composition.

In an embodiment, the surfactant(s) included in the solution comprise, consist essentially or consist of non-ionic surfactant. The or each surfactant included in the composition may, in an embodiment, be non-ionic. Non-ionic surfactants used in the composition may be characterized by a number average molecular weight (Mn) of from 2000 to 20000 daltons, for example from 2000 to 10000 daltons or from 2000 to 8000 daltons. Exemplary non-ionic surfactants include: polyethylene oxides, such as PEG 300 or PEG 400; fatty alcohols; primary alcohol (C₂-C₄)alkoxylates; secondary alcohol (C₂-C₄)alkoxylates; alkylphenol (C₂-C₄)alkoxylates; alkylamino (C₂-C₄)alkoxylates; amine polyglycol condensates, such as Triton^{®} CF-32 available from Union Carbide; polyoxy(C₂-C₃)alkylene fatty acid esters; polysorbates; sodium lauryl sulfate; sorbitan monolaurate; sorbitan monooleate; sorbitan monopalmitate; sorbitan trioleate; and, silicone surfactants, such as silicone polyether copolymers. The use of non-ionic silicone surfactants is not preferred, however.

Commercial examples of suitable non-ionic surfactants include: Lutensol ON 70, an ethoxylated (7EO) isodecyl alcohol, available from BASF; and, Lutensol TO 5C, an ethoxylated (5EO) saturated iso-C₁₃ alcohol, available from BASF.

In an embodiment, the surfactant(s) included in the debonding solution comprise, consist essentially or consist of anionic surfactant. The or each surfactant included in the solution may, in an embodiment, be anionic. Anionic surfactants used in the solution may be characterized by a number average molecular weight (Mn) of from 200 to 5000 daltons, for example from 200 to 2000 daltons. Moreover, anionic surfactants may be linear, partially branched, branched, or mixtures thereof.

The anionic surfactants may exist in an acid form or, alternatively, the acid form may be partly or wholly neutralized to form a surfactant salt. Typical agents for neutralization include: metal counterion bases, such as alkali metal hydroxides; ammonia; amines; or, alkanolamines of which non-limiting examples include monoethanolamine, diethanolamine, triethanolamine, 2-amino-1-propanol, 1-aminopropanol, monoisopropanolamine and 1-amino-3-propanol. It is noted that amine or alkanolamine neutralization may be effected to a full or partial extent. For instance, part of the anionic surfactant may be neutralized with metal counterion bases and part of the anionic surfactant may be neutralized with amines or alkanolamines.

Non-limiting examples of suitable anionic surfactants include: alkoxylated alkyl sulfate, in particular (C₂-C₃)alkoxylated (C₁₂-C₃₀)alkyl sulfate surfactants and more particularly the water-soluble salts thereof; non-alkoxylated alkyl sulfates, including sulfated C₈-C₂₀ fatty alcohols and 2-alkyl branched primary alkyl sulfates; alkyl benzene sulfonates, in particular (C₈-C₁₈)alkyl benzene sulfonates and more particularly linear (C₈-C₁₈)alkyl benzene sulfonates; methyl ester sulfonates; paraffin sulfonates; α-olefin sulfonates; internal olefin sulfonates; and, alkali metal sulfosuccinate esters.

Exemplary alkali metal sulfosuccinate esters having utility in the present disclosure include sodium sulfosuccinate esters of the formula:

NaO₃SCH(CO₂R')CH₂CO₂R

wherein:
R is H, C₆-C₁₈ alkyl or (C₂-C₃)alkoxylated(C₆-C₁₈)alkyl; and,
R' is C₆-C₁₈ alkyl or (C₂-C₃)alkoxylated(C₆-C₁₈)alkyl.

Compounds in accordance with this formula may be either mono- or diesters, the use of the latter being preferred.

Commercial examples of suitable non-ionic surfactants include: Triton GR 5M (*1,4-bis(2-ethylhexyl) sodium sulfosuccinate*)*,* available from Dow Chemical; LIAL^{®} and ISALCHEM^{®}, available from Sasol.

### Additives and Adjunct Ingredients

The present solutions may further comprise additives which are conventional in this field. In particular, the solutions might comprise, either alone or in combination: corrosion inhibitors, such as dialkylthioureas, cupric sulphate and copper sulphate; oxygen scavengers; stabilizers, including UV stabilizers; wetting agents; de-foaming agents; sequestrants; lubricants; and, rheological adjuvants for moderating the viscosity or thixotropic properties of the solutions and of which examples include thickeners, fillers and diluents.

Any such additives are necessarily minor ingredients of the present solutions and, when used, should only be used in amounts which are not deleterious to the performance of the solution. Further, as regards any additive or adjunct material, it is preferred that said material possess a flash point of at least 90°C, for example at least 100°C.

As further exemplary corrosion inhibitors mention may be made of the following commercial materials: the Rodine^{®} series, available from JMN Specialties, Inc. and Henkel Corporation; the Dodicor^{®} series, available from Clariant AG; and, the Armohib^{®} series available from Akzo Nobel Surfactants LLC.

Thickeners represent an optional component of the present solution and may constitute from 0 to 5 wt.% or from 0 to 2 wt.%, based on the total weight of the emulsion. Exemplary thickeners include but are not limited to: cellulosic thickeners and their derivatives; natural gums, such as guar gum, karaya gum, locust bean gum, carrageenan, tragacanth gum and xanthan gum; starches; stearates; fatty alcohols; hydrophobically modified alkali-soluble emulsion polymers (HASE); hydrophobically modified urethane-ethoxylate resins (HEUR); and, acrylic acid polymers and cross-polymers. The use of cellulosic thickeners and their derivatives may in particular be mentioned, of which examples include: carboxymethyl hydroxyethylcellulose; cellulose, hydroxybutyl methylcellulose; hydroxyethylcellulose; hydroxypropylcellulose; hydroxypropyl methyl cellulose; methylcellulose; microcrystalline cellulose; and, sodium cellulose sulfate.

The presence of non-polar co-solvents and non-polar diluents in the debonding solutions of the present disclosure is also not precluded where this can usefully moderate the viscosities thereof. Where the necessary polar solvent comprises or consists of water, any added non-polar co-solvent(s) or diluent should be a water-immiscible compound. Such a compound may be selected from the group consisting of: alkanes (R-H); cyclic alkanes; branched alkanes; aromatics (Ar-H); alkyl halides (R-X); and, mixtures thereof. Exemplary but non-limiting non-polar, water-immiscible solvents which may be used alone or in combination, include n-pentane, n-hexane, cyclohexane, n-heptane, isooctane, trimethylpentane, toluene, xylene and benzene.

### Preparation of the Debonding Solutions

The debonding solutions are formulated by simple mixing of the various components, typically under agitation at room temperature. If necessary, the solution may be prepared well in advance of its application. However, in an interesting alternative embodiment, a concentrated debonding solution may first be obtained by mixing components with only a fraction of the solvent that would be present in the debonding solution as applied: the concentrated debonding solution may then be diluted with the remaining solvent shortly before its introduction into the debonding bath. It is considered that such concentrated debonding solutions may be prepared and stored as either single-package concentrates - that can be converted by dilution with solvent only - or as multi-part concentrates, two or more of which must be combined and diluted to form a complete working solution according to the disclosure. Any dilution can be effected simply by the addition of solvent - such as deionized and / or demineralized water - under mixing. The debonding solution might equally be prepared within a rinse stream whereby one or more streams of the concentrate(s) is injected into a continuous stream of solvent.

Without specific intention to limit the amount of solvent included in the debonding solutions, it is preferred that said solutions contain from 15 to 75 wt.%, preferably from 20 to 70 wt.% and more preferably from 20 to 60 wt.%, based on the weight of the solution, of solvent. In an alternative but not mutually exclusive characterization, the debonding solution may be defined by a viscosity of from 0.005 to 1 Pa.s (50 cps to 1000 cps), as measured using a Brookfield viscometer at 25°C.

### DEBONDING METHODS AND APPLICATIONS

The present disclosure further provides a method for debonding a bonded article as described herein above, said method comprising the steps of:
a) providing a bonded article as defined herein above and which comprises at least one layer of a first adhesive interposed between two substrate surfaces, said bonded article being further provided with at least one layer of a second adhesive which is interposed between said two substrate surfaces;
b) treating the bonded article with the debonding solution as defined herein above at a temperature of from 20 to 90°C; and,
c) separating said at least one layer of first adhesive from its interposition between said two substrate surfaces.

In accordance with process aspects of the present disclosure, it is often advisable to remove foreign matter - such as oil, soil and metallic powder - from the provided bonded article by cleaning the relevant surfaces prior to step b) of the recited method. Such treatments are known in the art and can be performed in a single or multi-stage manner constituted by, for instance, the use of one or more of: a waterborne cleaning emulsion; a cleaning solvent, such as carbon tetrachloride or trichloroethylene; and, a water rinse, preferably of deionized or demineralized water. After said cleaning, degreasing and / or pre-treatment steps, the debonding composition is applied to the substrate (*step b)*)*.* The debonding composition may be applied at ambient temperature or the temperature of the composition may be elevated prior to application to, for instance, a temperature in the range from 30°C to 90°C, for instance from 30°C to 75°C.

It is conventional commercially that an operating bath as hereinbefore described is prepared and the debonding composition is applied to the bonded article by, without limitation, immersion, flooding, air-atomized spraying, air-assisted spraying, airless spraying, high-volume low-pressure spraying and air-assisted airless spraying. The minimum contact time of the composition with the bonded article is most broadly that time which is sufficient to weaken the adhesive bonds to an extent to permit the components to be separate by reasonable or operable force. That contact time can be as little as 0.1 hours or as great as 48 hours in that instance where the debonding treatment is being performed at lower temperatures: however, dependent upon the pH and the concentration of the applied solution, and dependent upon the application temperature, a contact time of from 0.1 to 24 hours or from 0.5 to 20 hours would be more typical.

The present disclosure does not preclude supplementary debonding compositions being applied to the bonded articles either prior to the application of the disclosed solutions or subsequent to treatment of the bonded articles with the disclosed solutions. The present disclosure therefore envisages iterative processes in which treatment of the bonded articles with the described debonding solution constitutes at least one step. Any supplemental debonding compositions may be applied by any suitable means known in the art, such as by immersion, dipping, spraying, roll-coating, electrocoating; painting; brushing; wiping; air-atomized spraying; air-assisted spraying; airless spraying; high-volume low-pressure spraying; and, air-assisted airless spraying.

The removal of the substrates from the adhesive (*step c)*) may or may not require the use of external force. For instance, external force may not be required where, after the application of the debonding composition(s), the adhesive has been completely separated from the substrate or even dissolved in the debonding composition(s). However, where at least part of the adhesive is still contacted with substrate(s), an external force may be used to completely delaminate or remove the adhesive. The external force - applied by, for instance, liquid washing or mechanical force - is used to compensate for the remaining bond strength between the adhesive(s) and the substrate(s).

In an embodiment, the tensile shear strength of the bonded substrates after step b) is at most 20 MPa, for instance at most 15 MPa, at most 10 MPa or even at most 5 MPa as determined in accordance with ASTM-D1002.

After step c), it is not precluded that the or each removed substrate be subjected to at least one cleaning step. Cleaning may be carried out in a conventional manner including but not limited to the use of: a waterborne cleaning emulsion; a cleaning solvent, such as carbon tetrachloride or trichloroethylene; a water rinse, preferably of deionized or demineralized water; a rinse of a dilute basic aqueous solution; and, a rinse of a dilute silicate solution. Further, at the conclusion of step c) or any subsequent cleaning step, the removed substrate may be dried using, for instance, ambient air drying, circulating warm air, forced air drying or infrared heating. The surface temperature of the substrate(s) should be controlled during drying to obviate any undesired physical, morphological or chemical changes to the substrate.

Various features and embodiments of the disclosure are described in the following examples, which are intended to be representative and not limiting.

### EXAMPLES

The following commercial products are employed in the Examples below:

| | | |
|---|---|---|
| Dipropyleneglycol DME: | | Stabilized dipropyleneglycol dimethyl, available from Dow |
| Chemical | | |
| Methocell 311: | Hydroxypropyl methylcellulose, available from Dow Chemical | |
| Imsol R: | Mixture of dimethyl succinate, dimethyl glutarate and dimethyl adipate, available from Invista | |
| Triton GR 5M | 1,4-bis(2-ethylhexyl) sodium sulfosuccinate, available from Dow | |
| Chemical | | |
| Mergital MES 2: | | Methyl oleate, available from BASF |
| Lutensol ON 70: | | Ethoxylated (7EO) isodecyl alcohol, available from BASF |
| Lutensol TO 5C: | | Ethoxylated (5EO) saturated iso-C₁₃ alcohol, available from |
| BASF | | |
| Technomelt PA6910: | Semi-crystalline polyamide polymer, available from Henkel | |
| Corporation. | | |
| Aquence FD151: | Aqueous dispersion of an anionic polyurethane, available from Henkel Corporation. | |
| R297 (Desmodur Ultra DN): | Hydrophilic aliphatic polyisocyanate based on hexamethyldiisocyanate (HDI), available from Covestro. | |
| Dispercoll U8755: | Anionic high-molecular-weight polyurethane dispersion, available from Covestro AG. | |
| Teroson 5065: | 2-component, solvent-free, epoxy resin-based adhesive, available from Henkel Corporation. | |

All remaining compounds listed in the examples may be obtained from Sigma Aldrich.

### Debonding Solution 1

A first debonding solution (DB1) was prepared in accordance with Table 1 herein below. The given ingredients were mixed in a speed mixer (1200 rpm; 1 minute) to ensure the formation of a homogenous mixture. The first debonding solution (DB1) had a pH of 3.7.

**Table 1**

| Ingredient | Percentage by Weight of Composition (Wt.%) |
|---|---|
| Dipropyleneglycol DME | 20.00 |
| Methocell 311 | 0.30 |
| Benzyl alcohol | 20.00 |
| Imsol R | 37.40 |
| Triton GR 5M | 1.00 |
| Formic acid (99%, aq.) | 1.00 |
| Mergital MES2 | 20.30 |

### Debonding Solution 2

A second debonding solution (DB2) was prepared in accordance with Table 2 herein below. The given ingredients were mixed in a speed mixer (1200 rpm; 1 minute) to ensure the formation of a homogenous mixture. The second debonding solution (DB2), as prepared, had a pH of 8.0.

**Table 2**

| Ingredient | Percentage by Weight Of Composition (wt.%) |
|---|---|
| Oleic acid | 12.00 |
| Triethanolamine | 25.00 |
| Lutensol ON 70 | 30.00 |
| Lutensol TO 5C | 8.00 |
| Water | 25.00 |

### Example 1

In this Example, the lap shear strength of bonded articles was investigated following the complete immersion of the bonded region of the substrates in the first debonding solution (DB1).

The lap shear test substrate was aluminium (Alu3003), the surface of which had been cleaned with an ethyl acetate wipe. The substrate was provided at a thickness of 0.1 inch and cut into six 2.5 cm x 10 cm (1" x 4") samples for tensile testing. Tensile lap shear (TLS) test was performed at room temperature based upon ASTM D3163-01 *Standard Test Method for Determining Strength of Adhesively Bonded Rigid Plastic Lap-Shear Joints in Shear by Tension Loading.* The bond overlapping area for each stated substrate was 2.5 cm x 2.5 cm (1" x 1") with a bond thickness of 0.1 cm (40 mil).

Where applicable, a primer was applied on one substrate in the overlapping region and dried at 100°C for 30 minutes to yield a layer having a dry film thickness of 100 microns. The further adhesive composition (*Teroson 5065*) was applied and was cured in the overlapping region to a dry film thickness of 1 mm by the application of a temperature of 60°C for 2 hours. The bonded structures - having the configuration shown in Figure 1 - were then stored at 25°C, 20% relative humidity for 24 hours prior to initial tensile testing.

For each bonded article, tensile lap shear strength was investigated initially and after 1 hour, 5 hours and 18 hours of complete immersion in the debonding solution, which solution is maintained at a temperature of 60°C. Where possible, three samples were tested for each contact-time data point and both the mean tensile lap shear strength and the standard deviation thereof were determined: the standard deviation is recorded in parentheses in Table 3 below.

**Table 3**

| Test No. | Primer Layer | Debonding Solution | pH of Debonding Solution | Tensile Lap Shear Strength (MPa) at Stated Contact Time | | | |
|---|---|---|---|---|---|---|---|
| | | | | 0 hours | 1 hour | 5 hours | 18 hours |
| 1 | None | DB1 | 3.7 | 20.7 (3.0) | 13.9 (2.2) | | 8.0 (2.4) |
| 2 | Aquence FD151 / R297 | DB1 | 3.7 | 6.6 (1.2) | 6.6 (0.5) | 3.0 | < 1.0 |
| 3 | Dispercoll U8755 | DB1 | 3.7 | 5.8 (0.4) | 5.6 (2.6) | | 0.3 (0.1) |

### Example 2

In this Example, the lap shear strength of bonded articles was investigated following the complete immersion of the bonded region of the substrates in the second debonding solution (DB2).

The lap shear test substrate was aluminium (Alu3003), the surface of which had been cleaned with an ethyl acetate wipe. The substrate was provided at a thickness of 0.1 inch and cut into six 2.5 cm x 10 cm (1" x 4") samples for tensile testing. Tensile lap shear (TLS) test was performed at room temperature based upon ASTM D3163-01 *Standard Test Method for Determining Strength of Adhesively Bonded Rigid Plastic Lap-Shear Joints in Shear by Tension Loading.* The bond overlapping area for each stated substrate was 2.5 cm x 2.5 cm (1" x 1") with a bond thickness of 0.1 cm (40 mil).

Where applicable, a primer was applied on one substrate in the overlapping region and dried at 100°C for 30 minutes to yield a layer having a dry film thickness of 100 microns. The further adhesive composition (*Teroson 5065*) was applied and was cured in the overlapping region to a dry film thickness of 1 mm by the application of a temperature of 60°C for 2 hours. The bonded structures - having the configuration shown in Figure 1 - were then stored at 25°C, 20% relative humidity for 24 hours prior to initial tensile testing.

For each bonded substrate, tensile lap shear strength was investigated initially and after 1 hour, 5 hours and 18 hours of complete immersion in the debonding solution, which solution is maintained at a temperature of 60°C. Where possible, three samples were tested for each contact-time data point and both the mean tensile lap shear strength and the standard deviation thereof were determined: the standard deviation is recorded in parentheses in Table 4 below.

**Table 4**

| Test No. | Primer Layer | Debonding Solution | pH of Debonding Solution | Tensile Lap Shear Strength (MPa) at Stated Contact Time | | | |
|---|---|---|---|---|---|---|---|
| | | | | 0 hours | 1 hour | 5 hours | 18 hours |
| 1 | None | DB2 | 8 | 20.7 (3.0) | 13.5 (2.0) | | 5.3 |
| 2 | Aquence FD151 / R297 | DB2 | 8 | 6.6 (1.2) | 7.1 (0.3) | 1.9 | < 1.0 |
| 3 | Dispercoll U8755 | DB2 | 8 | | | 6.7 (1.0) | 3.4 (2.0) |
| 4 | Dispercoll U8755 | DB2¹ | 13 | | | 8.8 (5.1) | 3.5 (2.7) |

| | | | | | | | |
|---|---|---|---|---|---|---|---|
| ¹ The pH of this debonding solution was attained by the addition of sodium hydroxide to the solution of Table 2 above. | | | | | | | |

In view of the foregoing description and example, it will be apparent to those skilled in the art that equivalent modifications thereof can be made without departing from the scope of the claims.

## Claims

1. A bonded article comprising at least one layer of a first adhesive interposed between two substrate surfaces, said bonded article being further provided with at least one layer of a second adhesive which is interposed between said two substrate surfaces, wherein:
the or each layer of first adhesive has a dry film thickness of from 10 to 500 µm;
said first adhesive is a polyurethane adhesive selected from aqueous polyurethane dispersion adhesives and polyurethane hot melt adhesives;
said first adhesive is distinct from said second adhesive; and,
said second adhesive is **characterized by** a higher intra-layer cohesive strength than said first adhesive, as determined in accordance with ASTM F88-94.

2. The bonded article according to claim 1 comprising:
a first substrate having an inner surface; and,
a second substrate having an inner surface,
wherein said layers of the first and second adhesive are interposed between the inner surfaces of the first and second substrates.

3. The bonded article according to claim 1 or claim 2, wherein at least one of said first and second substrates is metallic.

4. The bonded article according to any one of claims 1 to 3, wherein the or each layer of first adhesive has a dry film thickness of from 30 to 300 µm.

5. The bonded article according to any one of claims 1 to 4, wherein at least one layer of said first adhesive directly contacts the surface of a substrate.

6. The bonded article according to any one of claims 1 to 5, wherein said first adhesive is obtained by curing a two-part (2K) water-borne composition comprising:
p) a first part comprising:
(pi) at least one anionic polyurethane polymer having pendant hydroxyl groups; and,
q) a second part comprising at least one polyisocyanate compound having pendant -NCO groups,
wherein the two-part (2K) water-borne composition is **characterized in that** the molar ratio of active hydrogen atoms to -NCO groups in the composition is from 5:1 to 1:5.

7. The bonded article according to claim 6, wherein part p) of the two-part (2K) water-borne composition comprises at least one anionic polyurethane polymer which is **characterized by**:
an hydroxyl functionality of from 2 to 4;
an hydroxyl value of from 0.5 to 10 mg KOH/g, preferably from 0.5 to 4 mg KOH/g; and,
a weight average molecular weight (Mw) of from 50 to 200 kDa, preferably from 50 to 150 kDa, more preferably from 50 to 125 kDa.

8. The bonded article according to claim 6 or claim 7, wherein part q) of the two-part (2K) water-borne composition comprises a linear aliphatic polyisocyanate.

9. Use in the debonding of an adhesively bonded article as defined in any one of claims 1 to 8 of a solution in a polar solvent of at least one compound selected from the group consisting of: C₁₀ to C₂₆ fatty acids; salts of C₁₀ to C₂₆ fatty acids; and, C₁-C₄ alkyl esters of C₁₀ to C₂₆ fatty acids, wherein said debonding solution has a pH of from 3 to 14.

10. The use according to claim 9, wherein the debonding solution comprises, based on the weight of the solution:
from 5 to 30 wt.%, preferably from 5 to 25 wt.% of said at least one compound selected from the group consisting of: C₁₀ to C₂₆ fatty acids; salts of C₁₀ to C₂₆ fatty acids; and, C₁-C₄ alkyl esters of C₁₀ to C₂₆ fatty acids.

11. The use according to claim 9 or claim 10, wherein said at least one compound of the debonding solution is selected from the group consisting of: C₁₆-C₁₈ monounsaturated fatty acids; salts of C₁₆-C₁₈ monounsaturated fatty acids; and, C₁-C₄ alkyl esters of C₁₆-C₁₈ monounsaturated fatty acids.

12. The use according to claim 9 or claim 10, wherein said at least one compound of the debonding solution is selected from the group consisting of: oleic acid; salts of oleic acid; and, C₁-C₂ alkyl esters of oleic acid.

13. The use according to any one of claims 9 to 12, wherein the polar solvent of the debonding solution comprises or consists of at least one compound selected from the group consisting of: water; polyalkylene glycol dialkyl ethers; and, dibasic esters.

14. The use according to any one of claims 9 to 13, wherein the debonding solution further comprises, based on the weight of the solution:
from 0.5 to 50 wt.%, preferably from 0.5 to 40 wt.%, of at least one surfactant selected from the group consisting of non-ionic surfactants and anionic surfactants.

15. A method for debonding a bonded article, said method comprising the steps of:
a) providing a bonded article as defined in any one of claims 1 to 8, the bonded article comprising at least one layer of a first adhesive interposed between two substrate surfaces, said bonded article being further provided with at least one layer of a second adhesive which is interposed between said two substrate surfaces, wherein:
the or each layer of first adhesive has a dry film thickness of from 10 to 500 µm; and,
said first adhesive is a polyurethane adhesive selected from aqueous polyurethane dispersion adhesives and polyurethane hot melt adhesives;
b) treating the bonded article at a temperature of from 20 to 90°C with a solution in a polar solvent of at least one compound selected from the group consisting of: C₁₀ to C₂₆ fatty acids; salts of C₁₀ to C₂₆ fatty acids; and, C₁-C₄ alkyl esters of C₁₀ to C₂₆ fatty acids, wherein said solution has a pH of from 3 to 14; and,
c) separating said at least one layer of first adhesive from its interposition between said two substrate surfaces.

16. The method according to claim 15, wherein said treatment step comprises immersing the bonded article in said solution.

17. The method according to claim 15 or claim 16, wherein said treatment step is conducted at a temperature of from 30 to 75°C.

18. The method according to any one of claims 15 to 17, wherein said treatment step is **characterized by** a contact time of from 0.1 to 24 hours, preferably 0.5 to 20 hours.
